# EUROPEAN PATENT APPLICATION

(11) **EP 4 443 984 A1**
(43) Date of publication of application: **09.10.2024**
(21) Application number: 22900649.9
(22) Date of filing: 02.12.2022
(51) Int. Cl.: H04W 52/02

(54) **RESOURCE DETERMINING METHOD AND APPARATUS, AND TERMINAL**

(30) Priority: 03.12.2021 CN 202111472871
(71) Applicant: Spreadtrum Communications (Shanghai) Co., Ltd., Shanghai 201203 (CN)
(72) Inventor: ZHOU, Huayu, Shanghai 201203 (CN); WANG, Miao, Shanghai 201203 (CN); PAN, Zhengang, Shanghai 201203 (CN)
(74) Representative: Mewburn Ellis LLP
(86) International application number: PCT/CN2022/136063
(87) International publication number: WO 2023/098845

(57) **Abstract**

The disclosure discloses a method and apparatus for resource determination, and a terminal. The method includes the following. A time-domain resource for a first signal and/or a frequency-domain resource for the first signal is determined, where the first signal is a wake-up signal (WUS) or a synchronization preamble. By determining the time-domain resource for the first signal and/or the frequency-domain resource for the first signal, a time-domain resource for the WUS and/or a frequency-domain resource for the WUS can be determined, and time-frequency synchronization of a receiver configured to receive the WUS can be maintained, thereby realizing transmission of the WUS.

## Description

### TECHNICAL FIELD

This disclosure relates to the technical field of communication, and in particular to a method and apparatus for resource determination, and a terminal.

### BACKGROUND

In order to save power (energy), in some scenarios or moments, a terminal may turn off an integrated receiver and only turn on a low-power receiver separate from the integrated receiver, and the terminal may be woken up by a network (reachable by the network) through monitoring a wake-up signal (WUS) by the low-power receiver.

Currently, WUS transmission in a standard protocol specified by the 3rd generation partnership project (3GPP) needs further study.

### SUMMARY

In a first aspect, a method for resource determination is provided in the disclosure. The method includes the following. A time-domain resource for a first signal and/or a frequency-domain resource for the first signal are determined, where the first signal is a wake-up signal (WUS) or a synchronization preamble.

As can be seen, by determining the time-domain resource for the first signal and/or the frequency-domain resource for the first signal, a time-domain resource for the WUS and/or a frequency-domain resource for the WUS can be determined, and time-frequency synchronization of a receiver configured to receive the WUS can be maintained, thereby realizing transmission of the WUS.

In a second aspect, an apparatus for resource determination is provided in the disclosure. The apparatus includes a determining unit. The determining unit is configured to determine a time-domain resource for a first signal and/or a frequency-domain resource for the first signal, where the first signal is a WUS or a synchronization preamble.

In a third aspect, the operations of the method in the first aspect are applicable to a terminal.

In a fourth aspect, a terminal is provided in the disclosure. The terminal includes a processor, a memory, and computer programs or instructions stored in the memory. The processor is configured to execute the computer programs or instructions to perform the operations of the method in the first aspect.

In a fifth aspect, a chip is provided in the disclosure. The chip includes a processor. The processor is configured to perform the operations of the method in the first aspect.

In a sixth aspect, a chip module is provided in the disclosure. The chip module includes a transceiver assembly and a chip. The chip includes a processor. The processor is configured to perform the operations of the method in the first aspect.

In a seventh aspect, a computer-readable storage medium is provided in the disclosure. The computer-readable storage medium is configured to store computer programs or instructions which, when executed, are operable to perform the operations of the method in the first aspect.

In an eighth aspect, a computer program product is provided in the disclosure. The computer program product includes computer programs or instructions which, when executed, are operable to perform the operations of the method in the first aspect.

### BRIEF DESCRIPTION OF THE DRAWINGS

In order to describe more clearly technical solutions of embodiments of the disclosure, the following will give a brief introduction to the accompanying drawings used for describing the embodiments or the related art.
FIG. 1 is a schematic architectural diagram of a wireless communication system provided in embodiments of the disclosure.
FIG. 2 is a schematic flow chart of a method for resource determination provided in embodiments of the disclosure.
FIG. 3 is a block diagram illustrating functional units of an apparatus for resource determination provided in embodiments of the disclosure.
FIG. 4 is a schematic structural diagram of a terminal provided in embodiments of the disclosure.

### DETAILED DESCRIPTION

It may be appreciated that the terms "first", "second", and the like in embodiments of the disclosure are used to distinguish different objects, rather than describe a particular order. In addition, the terms "include", "comprise" , and "have" as well as variations thereof are intended to cover a non-exclusive inclusion. For example, a process, method, software, product, or device including a series of steps or units is not limited to the listed steps or units, and instead, it can optionally include other steps or units that are not listed or other steps or units inherent to the process, method, product, or device.

The term "embodiment" referred to in embodiments of the disclosure means that a particular feature, structure, or characteristic described in conjunction with the embodiment may be contained in at least one embodiment of the disclosure. The phrase appearing in various places in the specification does not necessarily refer to the same embodiment, nor does it refer to an independent or alternative embodiment that is mutually exclusive with other embodiments. It is explicitly and implicitly considered by those skilled in the art that an embodiment described herein may be combined with other embodiments.

The term "at least one" in embodiments of the disclosure refers to one or multiple, and the "multiple" refers to two or more.

The term "and/or" in embodiments of the disclosure describes an association relationship between associated objects, and indicates that there may be three relationships, for example, A and/or B may mean A alone, both A and B exist, and B alone. A and B each may be a singular from or a plural form. The character "/" herein can indicate that the associated objects are in an "or" relationship. In addition, the symbol "/" may represent a divisor, i. e., perform a division operation.

The term "at least one (item) of" or the like in embodiments of the disclosure refers to any combination of these items, including any combination of a single item or multiple items. For example, at least one (item) of *a, b,* or *c* can represent the following seven cases: *a; b; c; a* and *b; a* and *c*; *b* and *c*; *a, b,* and *c*. *a, b,* and *c* each may be an element or a set including one or more elements.

The term "equal to" in embodiments of the disclosure may be used together with "greater than", which is applicable to a technical solution used in a case of "greater than"; or may be used together with "less than", which is applicable to a technical solution used in a case of "less than". It may be noted that, when "equal to" is used together with "greater than", "equal to" is not used together with "less than"; and when "equal to" is used together with "less than", "equal to" is not used together with "greater than".

The terms "of', "relevant", "corresponding", and "indicated" in embodiments of the disclosure may be used interchangeably sometimes. It may be noted that meanings expressed by the terms are consistent when differences of the terms are not emphasized.

The term "connection" in embodiments of the disclosure refers to various connection methods, such as direct connection or indirect connection, so as to implement communication between devices, which is not limited herein.

The terms "network" and "system" in embodiments of the disclosure may refer to the same concept, and a communication system is a communication network.

The technical solutions of embodiments of the disclosure may be applicable to various wireless communication systems, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication System (UMTS), a wireless local area network (WLAN), a wireless fidelity (WiFi), a 6th-generation (6G) communication system, or other communication systems.

It may be noted that, a conventional wireless communication system generally supports a limited number (quantity) of connections and therefore is easy to implement. However, with the development of communication technology, a wireless communication system will not only support a conventional wireless communication system but also support, for example, device-to-device (D2D) communication, machine-to-machine (M2M) communication, machine-type communication (MTC), vehicle-to-vehicle (V2V) communication, vehicle to everything (V2X) communication, narrowband internet of things (NB-IoT) communication, etc. Therefore, the technical solutions of embodiments of the disclosure can also be applied to these wireless communication systems.

In addition, the technical solutions of embodiments of the disclosure may be applied to a beamforming scenario, a carrier aggregation (CA) scenario, a dual connectivity (DC) scenario, or a standalone (SA) deployment scenario, etc.

In embodiments of the disclosure, a spectrum used for communication between a terminal and a network device or a spectrum used for communication between a terminal and a terminal may be a licensed spectrum or an unlicensed spectrum, which is not limited herein. It may be noted that, the unlicensed spectrum may be understood as a shared spectrum, and the licensed spectrum may be understood as an unshared spectrum.

Since various embodiments of the disclosure are described in connection with a terminal and a network device, the terminal and the network device involved will be described in detail below.

Specifically, the terminal may be a device with transceiver functions, or may be referred to as a user equipment (UE), a remote UE, a relay UE, an access terminal, a subscriber unit, a subscriber station, a mobile station, a remote station, a mobile device, a user terminal, a smart terminal, a wireless communication device, a user agent, or a user apparatus. It may be noted that, a relay device is a terminal capable of providing a relay forwarding service for other terminals (including a remote terminal).

The terminal may also be referred to as a cellular radio telephone, a cordless telephone, a session initiation protocol (SIP) telephone, a wireless local loop (WLL) station, a personal digital assistant (PDA), various devices having wireless communication functions such as a handheld device, a computing device or other processing devices coupled with a wireless modem, an in-vehicle device, a wearable device, a terminal in a next-generation communication system (such as an NR communication system, a 6G communication system), or a terminal in a future evolved public land mobile network (PLMN), etc., which is not limited herein.

In addition, the terminal may be deployed on land, which includes indoor or outdoor, handheld, wearable, or in-vehicle. The terminal may also be deployed on water (such as ships, etc.). The terminal may also be deployed in the air (such as airplanes, balloons, satellites, etc.).

The terminal may include a device with wireless communication functions, such as a system-on-chip (SOC), a chip, a chip module, etc. The SOC may include a chip, or may also include other discrete components.

Exemplarily, the terminal may be a mobile phone, a pad, a computer with wireless transceiver functions, a virtual reality (VR) terminal device, an augmented reality (AR) terminal device, a wireless terminal device in industrial control, a wireless terminal device in self-driving, a wireless terminal device in remote medicine, a wireless terminal device in smart grid, a wireless terminal device in transportation safety, a wireless terminal device in smart city, or a wireless terminal device in smart home, etc.

Specifically, the network device may be a device with transceiver functions, may be a device for communicating with the terminal, and is responsible for radio resource management (RRM), quality of service (QoS) management, data compression and encryption, and data transmission and reception at an air-interface side.

The network device may be a base station (BS) in a communication system or a device deployed on a radio access network (RAN) for providing wireless communication functions, for example, a base transceiver station (BTS) in a GSM or CDMA communication system, a node B (NB) in a WCDMA communication system, and an evolutional node B (eNB or eNodeB) in an LTE communication system, a next-generation evolved node B (ng-eNB) in an NR communication system, a next-generation node B (gNB) in an NR communication system, a master node (MN) in a DC architecture, a secondary node (SN) in a DC architecture, etc, which is not limited herein.

Alternatively, the network device may be other devices in a core network (CN), such as an access and mobility management function (AMF), a user plane function (UPF), etc., or may be an access point (AP) in a WLAN, a relay station, a communication device in a future evolved PLMN, a communication device in an NTN network, etc.

The network device may include an apparatus with wireless communication functions, such as an SOC, a chip, a chip module, etc. The SOC may include a chip, or may also include other discrete components.

In addition, the network device may also communicate with an internet protocol (IP) network, for example, the Internet, a private IP network, or other data networks.

In some network deployments, the network device may be an independent node so as to implement all functions of the base station, and may include a centralized unit (CU) and a distributed unit (DU), such as a gNB-CU and a gNB-DU. The network device may further include an active antenna unit (AAU). The CU can implement some functions of the network device, and the DU can also implement some other functions of the network device. For example, the CU is responsible for processing non-real-time protocols and services, and implements functions of a radio resource control (RRC) layer, functions of a service data adaptation protocol (SDAP) layer, and functions of a packet data convergence protocol (PDCP) layer. The DU is responsible for processing physical (PHY) layer protocols and real-time services, and implements functions of a radio link control (RLC) layer, functions of a media access control (MAC) layer, and functions of a PHY layer. In addition, the AAU can implement some PHY layer processing functions, radio frequency (RF) processing functions, and active-antenna-related functions. Since RRC layer information will eventually become PHY layer information, or be transformed from PHY layer information, in such network deployment, it may be considered that higher-layer signaling, such as RRC-layer signaling, is transmitted by the DU, or transmitted by the DU and the AAU. It can be considered that, the network device may include at least one of the CU, the DU, or the AAU. In addition, the CU may be categorized into a network device in a RAN, or may be categorized into a network device in a CN, and the disclosure is not limited in this regard.

In embodiments of the disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In addition, the network device may provide communication services for terminals within a coverage of a cell. The cell may include a macro cell, a small cell, a metro cell, a micro cell, a pico cell, a femto cell, etc.

A wireless communication system in embodiments of the disclosure will be exemplified below.

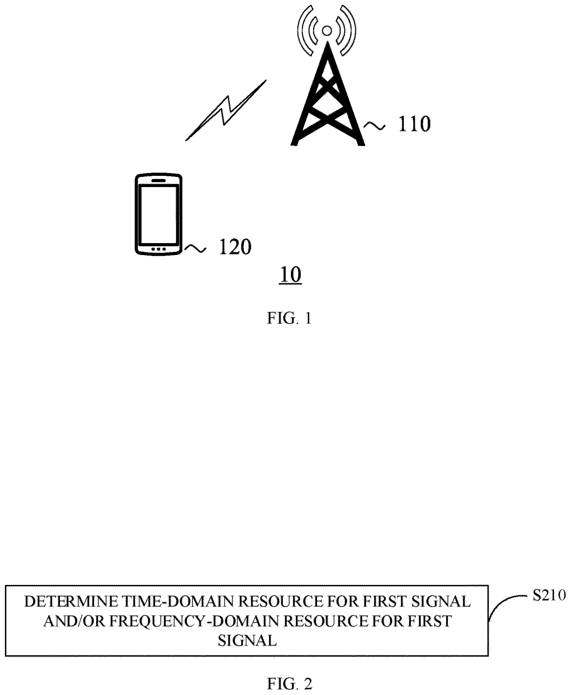

Exemplarily, referring to FIG. 1, a network architecture of a wireless communication system in embodiments of the disclosure is illustrated. As illustrated in FIG. 1, a wireless communication system 10 may include a network device 110 and a terminal 120. The network device 110 and the terminal 120 may communicate with each other wirelessly.

FIG. 1 only illustrates an example of the network architecture of the wireless communication system, and does not constitute a limitation on the network architecture of the communication system in embodiments of the disclosure. For example, in embodiments of the disclosure, the wireless communication system may further include a server or other devices. For another example, in embodiments of the disclosure, the wireless communication system may include multiple network devices and/or multiple terminal devices.

Firstly, some of the terms involved in embodiments of the disclosure will be elaborated to facilitate the understanding of those skilled in the art.

### 1. Paging-related physical downlink control channel (PDCCH)

Generally, when a terminal is in an RRC_IDLE state or an RRC_INACTIVE state, the terminal needs to monitor a paging-related PDCCH which is also referred to as a type 2-PDCCH. A radio network temporary identity (RNTI) for a paging-related PDCCH is P-RNTI, and a downlink control information (DCI) format for a paging-related PDCCH is DCI format 1-0.

After a paging-related PDCCH is detected by the terminal (i.e., a cyclic redundancy check (CRC) is descrambled by a P-RNTI successfully), the terminal can parse DCI. The DCI may contain a short message, so that the terminal may obtain an alert message or update system information. Additionally, the DCI may also contain a scheduling message, so that the terminal may receive a paging-related physical downlink share channel (PDSCH) to obtain a paging message, and then the terminal may initiate a random access procedure to enter an RRC_CONNECTED state.

The paging message has the following functions: (1) sending an incoming call request to the terminal in an RRC_IDLE state; (2) notifying the terminal in an RRC_IDLE state, an RRC_INACTIVE state, or an RRC_CONNECTED state that system information has changed; (3) instructing the terminal to start receiving an earthquake and tsunami warning system (ETWS) primary notification and/or an ETWS secondary notification; and instructing the terminal to start receiving a commercial mobile alert system (CMAS) notification.

In addition, before the paging message is obtained, the terminal needs to complete time-frequency synchronization and automatic gain control (AGC) adjustment by using a reference signal (for example, a synchronization signal/physical broadcast channel block (SSB)).

A monitoring occasion for a paging-related PDCCH may be configured via a search space set (SSS).

The terminal in an RRC_IDLE state or an RRC_INACTIVE state may use discontinuous reception (DRX) to receive a paging message in order to reduce power consumption. One DRX periodicity may contain at least one paging frame (PF).

One PF may be one radio frame or one system frame, and may contain one or multiple paging occasions (POs) or a starting point of a PO.

A PO may be used for determining a starting point of a monitoring occasion in a PF, may indicate a time-domain position for a paging-related PDCCH, may be used for transmitting paging DCI, may consist of multiple subframes, multiple time slots (also referred to as "slots"), or multiple orthogonal frequency division multiplexing (OFDM) symbols, and may consist of multiple monitoring occasions for a paging-related PDCCH. A monitoring occasion for a paging-related PDCCH may also be referred to as a paging PDCCH monitoring occasion (PMO). Therefore, one PO may contain multiple PMOs, or one PO may consist of a set of PMOs.

PMOs are multiple sequential monitoring occasions starting from a starting monitoring occasion, and PMOs are in one-to-one association with SSBs sent actually.

The terminal can determine a position of a PF or PO for the terminal according to a UE_ID of the terminal.

### 2. Radio resource management (RRM) measurement

The terminal in an RRC_IDLE state or an RRC_INACTIVE state also needs to perform periodic RRM measurement. The RRM measurement may include a serving cell measurement and a neighboring cell measurement.

The neighboring cell measurement may include the following. A network device specifies a frequency point, and the terminal may perform cell search and measurement at the frequency point. Alternatively, the network device specifies a frequency point and a physical cell identity (PCI), and the terminal may perform, at the frequency point, cell search and measurement by using the PCI. Alternatively, the network device specifies neither a frequency point nor a PCI, and the terminal may autonomously perform cell search and measurement.

The neighboring cell measurement may also be classified into an intra-frequency measurement and an inter-frequency measurement.

For example, in the case where an SSB serving as a measurement object for a neighboring cell has the same center frequency point and subcarrier spacing as an SSB for the serving cell, the measurement is the intra-frequency measurement.

For example, in the case where an SSB serving as a measurement object for a neighboring cell has a different center frequency point or subcarrier spacing from an SSB for the serving cell, the measurement is the inter-frequency measurement.

Generally, the terminal in an RRC_IDLE state or an RRC_INACTIVE state needs to perform an RRM measurement for the serving cell in a paging periodicity. A paging periodicity may also be referred to as a DRX periodicity or an idle state DRX periodicity.

Therefore, the terminal in an RRC_IDLE state or an RRC_INACTIVE state is mainly responsible for monitoring a paging-related PDCCH and performing RRM measurement.

### 3. Paging early indication (PEI)

In order to monitor a paging-related PDCCH and perform RRM measurement, in general, the network device needs to page the terminal in advance to wake up the terminal from deep sleep to process three SSB bursts, so that the terminal achieves certain time-frequency synchronization to monitor a paging-related PDCCH and perform RRM measurement simultaneously.

During paging-related PDCCH monitoring, in order to avoid unnecessary monitoring to reduce power consumption of the terminal, the network device may configure a PEI for a terminal in an RRC_IDLE state or an RRC_INACTIVE state, where the PEI may indicate whether the terminal needs to continue paging-related PDCCH monitoring, so that power consumption of the terminal may be reduced. The PEI may be DCI, a sequence, etc.

In the case where a PEI may be configured, the terminal may wake up from deep sleep to process 1 SSB burst, such that the terminal achieves a certain time-frequency synchronization to perform PEI detection.

If a PEI indicates that the terminal needs to continue PMO monitoring, the terminal continues to process remaining 2 SSB bursts and continues paging-related PDCCH monitoring.

If a PEI indicates that the terminal does not need to continue PMO monitoring, the terminal switches back to deep sleep.

In the case where a group paging rate is 10%, there is 10% probability that the terminal needs to perform paging-related PDCCH monitoring. Therefore, at the 10% probability, the terminal needs to process 3 SSB bursts to perform paging-related PDCCH monitoring and perform RRM measurement. At 90% probability, the terminal needs to process only 1 SSB burst to perform RRM measurement. Therefore, at 90% probability, the terminal processes fewer signals/channels, such that the terminal wakes up for a relatively short period (the terminal is in a light sleep state if the terminal does not process a signal(s)/channel(s) after waking up from deep sleep), thereby consuming less power.

In summary, power consumption of the terminal may be reduced by using a PEI.

### 4. Wake-up signal (WUS)

In some wireless communication networks (such as IoT), the probability that the network device pages the terminal is low, and as a result, the terminal does not have to monitor paging DCI at a PO(s) in each DRX periodicity. Therefore, in order to further reduce the power consumption of the terminal, a WUS mechanism is introduced in a standard protocol formulated by the 3rd generation partnership project (3GPP). A WUS is received before a PO.

In the case where the terminal is in an RRC_IDLE state or an RRC_INACTIVE state, the network device may send a WUS to the terminal before the terminal performs PO monitoring. Then the terminal may determine, according to the WUS, whether to perform PO monitoring, so that the terminal may avoid monitoring a corresponding PO in a paging periodicity each time, thereby reducing power consumption of the terminal.

In addition, the 3GPP is currently discussing issues related to introducing a new WUS, to prolong the battery lifespan of the terminal to a duration of several weeks or even several years.

In the case where the terminal is in a deep sleep state, the network device may send a WUS to wake up the terminal to perform relevant data transmission, that is, the terminal receives a WUS and then determines whether to leave a deep sleep mode to enter the traditional RRC_IDLE state/RRC_INACTIVE state/RRC_CONNECTED state.

In the case where the terminal is in a power-off state or a flight mode state, the network device may send a WUS to wake up the terminal to perform relevant data transmission, that is, the terminal receives a WUS and then determines whether to enter a power-on state or leave the flight mode state to enter the traditional RRC_IDLE state/RRC_INACTIVE state/RRC_CONNECTED state.

It may be noted that WUSs referred to subsequently in embodiments of the disclosure include both types of WUSs mentioned above.

### 5. Receiver in the terminal

In general, the terminal needs to use an integrated receiver to process an SSB burst(s) to perform paging-related PDCCH monitoring, so that the terminal may consume relatively high power (energy) to wake up from deep sleep and perform PEI detection.

The integrated receiver, which may also be referred to as a regular receiver or a main receiver, has a complete RF and baseband processing architecture.

The integrated receiver may be a receiver shared in an RRC_IDLE state/RRC_INACTIVE state/RRC_CONNECTED state.

The integrated receiver may include an SSB receiving module and a data/control receiving module in terms of functional modules.

In order to reduce the power consumed by the terminal to wake up from deep sleep and reduce the power consumed for signal detection, a low-power receiver separate from the integrated receiver may be used to perform WUS detection. With the separate low-power receiver, power saving gain can be increased.

The low-power receiver may also be referred to as a low-power WUS receiver (LP-WUR), a WUS receiver (WUR), or an auxiliary receiver.

The low-power receiver can have two types of receiving methods as follows.

Method 1: the low-power receiver periodically performs WUS detection. Since the lower-power receiver has fewer components that need to be turned off and on, the low-power receiver may wake up from deep sleep with less power consumption. In addition, since a specially designed WUS is provided, the low-power receiver may consume less power to perform WUS detection.

Method 2: the low-power receiver can remain in a state of stand-by and WUS detection. The low-power receiver does not need to consume power to wake up from deep sleep since the low-power receiver does not need to switch between deep sleep and WUS detection. In fact, the low-power receiver is only in a deep sleep state (which may also be referred to as a stand-by state), that is, the low-power receiver does not need to wake up to perform WUS detection.

The low-power receiver may have three architectures as follows.

The first architecture is a traditional architecture, including a band-pass filter (BPF), an RF amplifier, a local oscillator (LO), a mixer, a detector, etc., but including no analog digital converter (ADC).

The second architecture is an architecture with as many passive circuits as possible, including a BPF, an optional RF amplifier, and a detector, but including no LO or no mixer.

The third architecture is a fully passive circuit architecture that uses an energy harvesting method to achieve zero power consumption.

The two types of methods of the receiver described above can be achieved by using the above three architectures.

In order to save power, in some scenarios or moments, the terminal may only turn on the low-power receiver separate from the integrated receiver but turn off the integrated receiver, and thus the terminal may be woken up by the network (reachable by the network) through monitoring a WUS by the low-power receiver.

In general, in order to simplify the low-power receiver, a WUS may be modulated by on off keying (OOK), such that the receiver in the terminal can be simplified to detect energy of a modulation symbol (instead of amplitude/phase of a modulation symbol). As long as the detected energy of a modulation symbol exceeds a threshold, it is determined as "on", otherwise, it is determined as "off'. In addition, since processing is performed in RF or intermediate frequency (IF), envelope detection can be used.

A waveform of a WUS may be a single-tone waveform or a single-carrier waveform, or may be a multi-tone waveform or multi-carrier waveform.

For a single-tone waveform or a single-carrier waveform, a modulation symbol may be a single-tone time-domain symbol or a single-carrier time-domain symbol. For a single-tone waveform or a single-carrier waveform, a modulation symbol may be referred to as an OOK symbol.

For a multi-tone waveform or a multi-carrier waveform, a modulation symbol may be a multi-tone time-domain symbol or a multi-carrier time-domain symbol, such as an OFDM time-domain symbol. For a multi-tone waveform or a multi-carrier waveform, a modulation symbol may be referred to as a generalized OOK symbol.

For a multi-tone waveform or a multi-carrier waveform, a sequence or part of the sequence may be modulated onto multiple subcarriers (a same OFDM symbol). When detection is performed, a frequency-domain dot-multiplication method (i.e., a received frequency-domain signal is dot-multiplied with a local frequency-domain version of a sequence or part of the sequence) may be adopted, which may be equivalent to a time-domain correlation method (i.e., the received time-domain signal is correlated with the local time-domain version of the sequence or part of the sequence).

For the low-power receiver, the time-domain correlation method is usually adopted. Of course, a signal for generating a local time-domain version of a sequence or part of the sequence may be needed in the RF and the IF, and the sequence is related to a cell or the terminal, such that generation of the sequence may be more flexible.

It may be noted that a PO in embodiments of the disclosure may be understood as a paging occasion, and may also be understood as a UE subgroup corresponding to the PO or a UE group corresponding to the PO. A UE subgroup (UE group) corresponding to a PO may be understood as a set of terminals corresponding to/mapped to/associated with the same PO. One PO may correspond to one UE subgroup, which is not limited in the disclosure.

In summary, in order to save power, in some scenarios or moments, the terminal may turn off the integrated receiver and only turn on the low-power receiver separate from the integrated receiver, and the terminal may be woken up by the network (reachable by the network) through monitoring a WUS by the low-power receiver.

The following embodiments of the disclosure will elaborate transmission of a WUS in terms of how to define a time-domain resource for the WUS and/or a frequency-domain resource for the WUS and how to maintain time-frequency synchronization of a receiver (i.e., a low-power receiver) used to receive the WUS, respectively.

### 1. How to define the time-domain resource for the WUS and/or the frequency-domain resource for the WUS

In embodiments of the disclosure, the time-domain resource for the WUS and/or the frequency-domain resource for the WUS needs to be defined to reduce power consumption of a terminal and reduce network resource overhead.

The time-domain resource for the WUS and/or the frequency-domain resource for the WUS may also be referred to as a wake-up occasion. Similar to a PO, a wake-up occasion may contain multiple WUS monitoring occasions, or a wake-up occasion may consist of a set of WUS monitoring occasions, which is not limited in the disclosure. In the following, a WUS monitoring occasion may also be referred to as a WUS unless stated otherwise.

### 1) Decoupling between a wake-up occasion and a PO

It may be noted that in embodiments of the disclosure, decoupling between a wake-up occasion and a PO needs to be considered so as to achieve a flexible configuration of the wake-up occasion. The decoupling between the wake-up occasion and the PO may be understood as a low coupling degree between the wake-up occasion and the PO. For example, a position of the time-frequency resource for the wake-up occasion is different from a position of the time-frequency resource for the PO, or the number of monitoring occasions (corresponding beams) in the wake-up occasion is not equal to the number of paging monitoring occasions (corresponding beams) in the PO.

The purpose of the decoupling between the wake-up occasion and the PO is as follows.

Firstly, in the case where the wake-up occasion is coupled with the PO, a new round of beam sweeping is required for the transmission of the WUS before beam sweeping for the PO, which may increase the network resource overhead. In addition, since there is only one analog beam in one OFDM symbol, an increase in the number of rounds of beam sweeping leads to a decrease in analog-beam flexibility, resulting in a decrease in scheduling efficiency, thereby increasing the network resource overhead.

On the contrary, in the case where the wake-up occasion is decoupled from the PO, the wake-up occasion can share a same round of beam sweeping with an SSB. For example, before beam sweeping for a PO, one WUS (monitoring occasion) corresponds to one SSB and is frequency-division-multiplexed with the SSB, thereby reducing the network resource overhead.

Secondly, coupling between the wake-up occasion and the PO cannot improve latency of paging. In the case of a relatively short paging periodicity, even if the WUS is before a PO and close enough to the PO, the latency of paging cannot be improved (since it needs to take time to turn on the integrated receiver to receive paging). In the case of a relatively long paging periodicity, the case that the WUS is before the PO may increase the latency of paging.

Thirdly, in the case where the wake-up occasion is decoupled from the PO, the WUS can be configured with a separate periodicity, such that the latency of paging can be improved (e.g., in the case that the paging periodicity is a long periodicity, a periodicity for the WUS is a short periodicity in the long periodicity).

Fourthly, currently, a paging periodicity is related to other processes, such as an RRM measurement, such that it is difficult for the network to increase the paging periodicity to optimize power saving for the terminal.

Fifthly, power consumption of a separate low-power receiver may be not related to a paging periodicity, which makes it easy to reduce the power consumption of the low-power receiver.

In summary, in the case where the wake-up occasion is decoupled from the PO, the position of the wake-up occasion can be flexibly configured, thereby reducing power consumption of the terminal, ensuring network reachability, and reducing the network resource overhead.

### 2) How to determine the time-domain resource for the WUS and/or the frequency-domain resource for the WUS.

In embodiments of the disclosure, how to determine the time-domain resource for the WUS and/or the frequency-domain resource for the WUS can be implemented via configuration information, that is, the configuration information is used for determining the time-domain resource for the WUS and/or the frequency-domain resource for the WUS.

In embodiments of the disclosure, the configuration information may be sent via a higher-layer signaling or a higher-layer parameter in a process such as cell search, cell access, cell residence, random access, initial access, cell reselection, cell handover, uplink-downlink resource scheduling, etc.; may be specified (defined/clarified) by a standard protocol(s); or may be pre-configured, which is not limited in the disclosure.

The following takes a terminal and a network device as examples for illustration.

Exemplarily, for the terminal, the terminal may obtain the configuration information, and determine the time-domain resource for the WUS and/or the frequency-domain resource for the WUS according to the configuration information.

For the network device, the network device may send the configuration information, and the configuration information is used for determining the time-domain resource for the WUS and/or the frequency-domain resource for the WUS.

### 3) The time-domain resource for the WUS

In embodiments of the disclosure, the time-domain resource for the WUS may include a size of the time-domain resource for the WUS.

Additionally, the time-domain resource for the WUS may include the number of symbols (e.g., the number of OFDM symbols) for the WUS.

Exemplarily, taking the terminal as an example, the terminal may determine the number of symbols for the WUS according to the configuration information, and the configuration information is used for determining the number of symbols for the WUS.

In the case where the wake-up occasion is decoupled from the PO, the wake-up occasion can share the same round of beam sweeping with an SSB, for example, (one monitoring occasion for) one WUS corresponds to one SSB, such that the network resource overhead can be reduced by decreasing the number of rounds of sweeping beam. Therefore, in order to realize that the WUS can share the same round of beam sweeping with an SSB, the WUS may be frequency-division-multiplexed with the SSB in embodiments of the disclosure. In this case, the WUS can share a symbol(s) for an SSB.

For example, the WUS shares 2 or 4 symbols (e.g., OFDM symbols) for an SSB, that is, the number of symbols for the WUS is 2 or 4, or the number of symbols for the WUS is 2 or 4 symbols (e.g., OFDM symbols), such that the WUS can be frequency-division-multiplexed with the SSB.

### 4) The frequency-domain resource for the WUS

In embodiments of the disclosure, the frequency-domain resource for the WUS may include a size of the frequency-domain resource for the WUS.

Additionally, the frequency-domain resource for the WUS may include a bandwidth for the WUS.

Exemplarily, taking the terminal as an example, the terminal may determine the bandwidth for the WUS according to the configuration information, and the configuration information is used for determining the bandwidth for the WUS.

In some possible designs, since a carrier bandwidth for enhanced machine-type communication (eMTC) may be 6 resource blocks (RBs) or 6 physical resource blocks (PRBs), in order to ensure that the low-power receiver can reuse an RF portion for an eMTC receiver, the bandwidth for the WUS may be 6 RBs or 6 PRBs in embodiments of the disclosure.

In some possible designs, since a bandwidth for a primary synchronization signal (PSS)/secondary synchronization signal (SSS) in the 5G NR may be 12 RBs or 12 PRBs, in order to ensure that the low-power receiver can reuse an RF portion for a PSS/SSS receiver in the 5G NR, the bandwidth for the WUS may be 12 RBs or PRBs in embodiments of the disclosure.

In some possible designs, the bandwidth for the WUS may be an integral multiple of 6 RBs or an integral multiple of 6 PRBs. In this way, the WUS can better coexist with a PDCCH because a bandwidth of a control resource set (CORESET) for the PDCCH is generally an integer multiple of 6 RBs or an integer multiple of 6 PRBs.

### 5) The time-domain resource for the WUS and frequency-domain resource for the WUS

In embodiments of the disclosure, the time-domain resource for the WUS may include a size of the time-domain resource for the WUS, and the frequency-domain resource for the WUS may include a size of the frequency-domain resource for the WUS.

Additionally, the time-domain resource for the WUS may include the number of symbols for the WUS, and the frequency-domain resource for the WUS may include the bandwidth for the WUS.

Exemplarily, taking the terminal as an example, the terminal may determine the number of symbols for the WUS and the bandwidth for the WUS according to the configuration information, and the configuration information is used for determining the number of symbols for the WUS and the bandwidth for the WUS.

In some possible designs, the low-power receiver needs to detect a sequence of the WUS. Since a length of the sequence of the WUS has an impact on detection performance of the low-power receiver, in embodiments of the disclosure, the length of the sequence of the WUS may be 288 to ensure the detection performance of the low-power receiver.

In the case where the length of the sequence of the WUS is 288, the WUS may occupy 288 resource elements (REs). In this case, the following can be determined in embodiments of the disclosure.
(i) The number of symbols for the WUS may be 4 (4 symbols or 4 OFDM symbols) and the bandwidth for the WUS may be 6 RBs or 6 PRBs; or (ii) the number of symbols for the WUS may be 2 (2 symbols or 2 OFDM symbols) and the bandwidth for the WUS may be 12 RBs or 12 PRBs. Since the number of symbols for the WUS is 2, the WUS may be sent twice in 4 symbols.

In some possible designs, the length of the sequence of the WUS may be 576 to enhance the detection performance of the low-power receiver. In the case where the length of the sequence of the WUS is 576, the WUS may occupy 576 REs. In this case, the following may be determined in embodiments of the disclosure.
(i) The number of symbols for the WUS may be 4 (4 symbols or 4 OFDM symbols) and the bandwidth for the WUS may be 12 RBs or 12 PRBs; or (ii) the number of symbols for the WUS may be 2 (2 symbols or 2 OFDM symbols) and the bandwidth for the WUS may be 24 RBs or 24 PRBs. Since the number of symbols for the WUS is 2, the WUS may be sent twice in 4 symbols.

In some possible designs, the bandwidth for the WUS may include *X* RBs or *X* PRBs that serve as a guard band, where *X* is a positive integer, such that adjacent-channel interference can be avoided by using the guard band, thereby reducing complexity of the low-power receiver.

Further, *X* may be 1 for ease of implementation.

### 6) A position of the frequency-domain resource for the WUS

In embodiments of the disclosure, the frequency-domain resource for the WUS may include a position of the frequency-domain resource for the WUS.

It may be noted that the position of the frequency-domain resource for the WUS may be understood as a frequency-domain position of the wake-up occasion in the frequency domain or all possible frequency-domain positions of WUS monitoring occasions.

Exemplarily, taking the terminal as an example, the terminal may determine the position of the frequency-domain resource for the WUS according to the configuration information.

Since at least one OFDM symbol is required for an analog beam during beam sweeping, if the wake-up occasion only expands in the time domain, the wake-up occasion will occupy more OFDM symbols, resulting in a relatively large network overhead. As can be seen, the position of the frequency-domain resource for the WUS needs to be determined in embodiments of the disclosure.

In the case where a channel bandwidth is 100 RBs or 100 PRBs (about 20 MHz) and the bandwidth for the WUS is 6 RBs or 6 PRBs, there may be 16 WUSs in the channel bandwidth. In the case where the channel bandwidth is 240 RBs or 240 PRBs (about 50 MHz) and the bandwidth for the WUS is 6 RBs or 6 PRBs, there may be 40 WUSs in the channel bandwidth.

For how to determine the position of the frequency-domain resource for the WUS, the following methods may be adopted in embodiments of the disclosure.
(i) The position of the frequency-domain resource for the WUS may start from a reference position.

It may be appreciated that, taking the terminal as an example, the terminal may determine that candidate (all possible) positions of the frequency-domain resource for the WUS start from the reference position. Alternatively, the terminal may determine candidate (all possible) starting positions of the frequency-domain resource for the WUS according to the reference position in the configuration information.

It may be noted that the reference position may be an RB or a PRB, i.e., an RB or a PRB where the starting position of the frequency-domain resource for the WUS is located, and the reference position may be configured by a higher-layer parameter.

As can be seen, in embodiments of the disclosure, the starting position of the frequency-domain resource for the WUS may be determined by the reference position, such that the network device and the terminal may determine, according to an agreed rule, all possible frequency-domain positions for the WUS with the reference position as a starting point, thereby simplifying signaling and reducing signaling overhead.

(ii) The position of the frequency-domain resource for the WUS may be determined by bitmap information, where a bit in the bitmap information may indicate one or more WUSs.

It may be appreciated that, taking the terminal as an example, the terminal may determine candidate (all possible) positions of the frequency-domain resource for the WUS according to the bitmap information in the configuration information.

As can be seen, the network device may send the bitmap information to indicate all possible positions of the frequency-domain resource for the WUS, and indication via the bitmap information is conducive to increasing flexibility of configuration, such as skipping a fixed RB(s).

(iii) The position of the frequency-domain resource for the WUS may be determined by the bitmap information, where a bit in the bitmap information may indicate one or more WUSs plus one or more guard bands.

It may be appreciated that, taking the terminal as an example, the terminal may determine the candidate (all possible) positions of the frequency-domain resource for the WUS according to the bitmap information in the configuration information.

As can be seen, the network device may send the bitmap information to indicate all possible positions of the frequency-domain resource for the WUS, and indication via the bitmap information is conducive to increasing the flexibility of configuration, such as skipping a fixed RB(s). Meanwhile, adjacent-channel interference can be avoided by using the guard band, thereby reducing the complexity of the low-power receiver.

In some possible designs, the bandwidth of the guard band may be *X* RBs or *X* PRBs*,* where *X* is a positive integer, thereby achieving a tradeoff between less adjacent-channel interference and less guard-band resource overhead.

### 7) The position of the time-domain resource for the WUS

In embodiments of the disclosure, the time-domain resource for the WUS may include a position of the time-domain resource for the WUS.

It may be noted that the time-domain resource for the WUS may be understood as a wake-up occasion (i.e., WUS occasion) or a WUS monitoring occasion. A wake-up occasion consists of a set of WUS monitoring occasions.

It may be noted that the position of the time-domain resource for the WUS may be understood as a position of the wake-up occasion or a position of the WUS monitoring occasion.

Exemplarily, taking the terminal as an example, the terminal may determine the position of the time-domain resource for the WUS according to the configuration information.

Since the wake-up occasion is decoupled from the PO, the terminal is unable to determine, according to the PO, the wake-up occasion before the PO, and thus the position of the time-domain resource for the WUS needs to be determined in embodiments of the disclosure.

For how to determine the position of the time-domain resource for the WUS, the following methods may be adopted in embodiments of the disclosure.
(i) The position of the time-domain resource for the WUS may include a periodicity and an offset.

In some possible designs, the periodicity may be in slot granularity. For example, the periodicity may be 2 slots, 4 slots, etc.

Additionally, the periodicity may indicate that the position of the time-domain resource for the WUS is a 0th slot, an xth slot, a 2xth slot, and so on, where x is a periodicity value represented/indicated by the periodicity.

In some possible designs, the offset may be in slot granularity. For example, offset may be 1 slot, 2 slots, etc.

Additionally, the periodicity and the offset may be used together to indicate that the position of the time-domain resource for the WUS is a (0+y)th slot, an (x+ y)th slot, a (2x+y)th slot, and so on, where x is a periodicity value represented/indicated by the periodicity and y is an offset value represented/indicated by the offset.

For example, in the case where the periodicity is 4 and the offset is 1, it indicates that the position of the time-domain resource for the WUS is a slot determined by offsetting 1 slot from the 0th slot, i.e., the 1st slot, or offsetting 1 slot from the 4th slot, i.e., the 5th slot, or the like.

It may be appreciated that, taking the terminal as an example, the terminal may determine a slot position of the time-domain resource for the WUS according to the periodicity and the offset in the configuration information.

As can be seen, the network device may flexibly configure a slot-level position of the time-domain resource for the WUS by means of the periodicity and the offset, thus contributing to flexibility and diversity of resource configuration.

In some possible designs, the periodicity may be equal to a periodicity for an SSB, and the offset may be equal to an offset for the SSB, such that the WUS can share a slot resource(s) with the SSB, thereby saving the network resource overhead.

In some possible designs, the periodicity may be in millisecond granularity. For example, the periodicity may be 2 milliseconds, 4 milliseconds, etc.

Additionally, the periodicity may indicate that the position of the time-domain resource for the WUS is a 0th millisecond, a zth millisecond, a 2zth millisecond, and so on, where z is a periodicity value represented/indicated by the periodicity.

In some possible designs, the offset may be in millisecond granularity. For example, offset may be 1 millisecond, 2 milliseconds, etc.

Additionally, the periodicity and the offset may be used together to indicate that the position of the time-domain resource for the WUS is a (0+*t*)th millisecond, a (*z*+ *t)*th millisecond, a (2*z*+ *t*)th millisecond, and so on, where *z* is a periodicity value represented/indicated by the periodicity and *t* is an offset value represented/indicated by the offset.

For example, in the case where the periodicity is 4 and the offset is 1, it indicates that the position of the time-domain resource for the WUS is a millisecond determined by offsetting 1 millisecond from the 0th millisecond, i.e., the 1st millisecond, offsetting 1 millisecond from the 4th millisecond, i.e., the 5th millisecond, or the like.

It may be appreciated that, taking the terminal as an example, the terminal may determine a millisecond-level position of the time-domain resource for the WUS according to the periodicity and the offset in the configuration information.

As can be seen, the network device may flexibly configure the millisecond-level position of the time-domain resource for the WUS through the periodicity and the offset, thus contributing to the flexibility and diversity of the resource configuration.

In some possible designs, the periodicity may be equal to the periodicity for the SSB, and the offset may be equal to the offset for the SSB, such that the WUS can share a resource(s) with the SSB, thereby saving the network resource overhead.

(ii) The position of the time-domain resource for the WUS may include a duration.

In some possible designs, the duration may be in slot granularity.

For example, the duration may be 3 slots, the duration may be 4 slots, etc.

In some possible designs, the duration may be in millisecond granularity.

For example, the duration may be 3 milliseconds, the duration may be 4 milliseconds, etc.

It may be appreciated that, taking the terminal as an example, the terminal may determine the position of the time-domain resource for the WUS according to the duration in the configuration information.

As can be seen, the network device may flexibly configure the position of the time-domain resource for the WUS through the duration, thus contributing to the flexibility and diversity of the resource configuration.

In some possible designs, the duration may be equal to a duration for the SSB, such that the WUS can share a resource(s) with the SSB, thereby saving the network resource overhead.

(iii) The position of the time-domain resource for the WUS may include a position of a starting symbol in a slot.

In embodiments of the disclosure, the position of the starting symbol in the slot may be a starting position in symbol (e.g., OFDM symbol) granularity in the slot.

It may be appreciated that, taking the terminal as an example, the terminal may determine the position of the time-domain resource for the WUS according to the position of the starting symbol in the slot in the configuration information.

As can be seen, the network device may flexibly configure a symbol-level position of the time-domain resource for the WUS by means of the position of the starting symbol in the slot, thus contributing to the flexibility and diversity of the resource configuration.

In some possible designs, the position of the starting symbol in the slot for the WUS may be the same as a position of a starting symbol in a slot for an SSB, such that the WUS can share a slot resource(s) with the SSB, thereby saving the network resource overhead.

(iv) The position of the time-domain resource for the WUS may include the periodicity for the WUS, and the periodicity for the WUS is less than or equal to the paging periodicity.

As can be seen, since the periodicity for the WUS is less than or equal to the paging periodicity, delay caused by wakeup can be reduced.

### 8) Invalidity of the WUS

In embodiments of the disclosure, the WUS is invalid in the case where the WUS overlaps an SSB.

It may be noted that the WUS overlapping the SSB may be understood as follows.
(i) The position of the time-domain resource for the WUS partially or fully overlaps a position of a time-domain resource for the SSB in the time domain, in other words, the WUS partially or fully overlaps the SSB in the time domain.
(ii) The position of the time-domain resource for the WUS partially or fully overlaps the position of the time-domain resource for the SSB in the frequency domain, in other words, the WUS partially or fully overlaps the SSB in the frequency domain.

In addition, in the case where the WUS is invalid, the terminal does not monitor the WUS.

### 9) A mapping (association/correspondence) relationship between wake-up occasions and POs.

It may be noted that since a PO may be understood as a UE subgroup corresponding to the PO or a UE group corresponding to the PO, the mapping (association/correspondence) relationship between wake-up occasions and POs may also be a mapping (association/correspondence) relationship between wake-up occasions and UE subgroups corresponding to POs or a mapping (association/correspondence) relationship between wake-up occasions and UE groups corresponding to POs.

In addition, in embodiments of the disclosure, the wake-up occasion is decoupled from the PO, but the terminal still needs to receive a paging message to determine whether the terminal is really paged after the WUS is detected by the terminal. Therefore, the mapping (association/correspondence) relationship between wake-up occasions and POs needs to be defined in embodiments of the disclosure.

In a possible design, the number of wake-up occasions may be determined by the number of PFs, *N,* and the number of POs, *Ns,* in a paging periodicity.

It may be appreciated that, taking the terminal as an example, the terminal may determine the number of wake-up occasions according to the number of PFs, *N*, and the number of POs, *Ns,* in the configuration information.

As can be seen, since the number of wake-up occasions is determined by the parameter *N* and the parameter *Ns,* the terminal is able to determine in which PO the paging message is to be received after the WUS is detected by the terminal. In other words, the terminal is able to determine through which UE subgroup the paging message is to be received after the WUS is detected by the terminal, thereby establishing the mapping relationship between wake-up occasions and POs.

Further, the number of wake-up occasions may be *N*Ns.*

In addition, it may be noted that the network device may define *N* PFs and *Ns* POs in each PF by setting the parameter *N* and the parameter *Ns.* A PFs may be in one-to-one-correspondence with *N* UE groups, and *Ns* POs may be in one-to-one-correspondence with *Ns* UE subgroups. Therefore, the terminal can determine the UE subgroup corresponding to the PO according to the parameter *N* and the parameter *Ns,* and the number of UE subgroups corresponding to POs is *N*Ns.* In the case where wake-up occasions are associated with POs, similarly, the terminal can determine the number of wake-up occasions according to the parameter *N* and the parameter *Ns.*

In some possible designs, the mapping (association/correspondence) relationship between wake-up occasions and POs is as follows.
(i) One wake-up occasion is associated with one PO.
   That is, wake-up occasions are in one-to-one mapping (association/correspondence) with POs. In other words, wake-up occasions are in one-to-one mapping with UE subgroups corresponding to POs.
   As can be seen, a false alarm rate (FAR) of wakeup can be reduced by means of one-to-one mapping.
(ii) One wake-up occasion is associated with multiple POs.
   That is, wake-up occasions are in one-to-many mapping (association/correspondence) with POs in other words, wake-up occasions are in one-to-many mapping (association/correspondence) with UE subgroups corresponding to POs.
   As can be seen, the resource overhead for the WUS can be reduced by means of one-to-many mapping.
(iii) Multiple wake-up occasions are associated with one PO.
   That is, wake-up occasions are in many-to-one mapping with POs, in other words, wake-up occasions are in many-to-one mapping (association/correspondence) with UE subgroups corresponding to POs.
   As can be seen, the low-power receiver is able to monitor multiple wake-up occasions by means of many-to-one mapping. In this way, WUS repetition can be supported, thereby improving performance of WUS reception. Alternatively, one wake-up occasion corresponds to one UE subgroup (i.e., in one PO there may be multiple UE subgroups). In this way, a probability that the lower-power receiver is woken up can be reduced by means of UE subgroups, thereby saving power.
(iv) Multiple wake-up occasions are associated with multiple POs
   That is, wake-up occasions are in many-to-many mapping with POs, in other words, wake-up occasions are in many-to-many mapping (association/correspondence) with UE subgroups corresponding to POs.
   For example, *K* (*K* > 1) wake-up occasions may be associated with *M* (*M* > 1) POs, where *K* and *M* may be configured by a higher-layer parameter.
   As can be seen, the low-power receiver is able to monitor multiple WUS monitoring occasions by means of many-to-many mapping, such that a balance between the resource overhead and the receiving performance can be achieved.
(v) Wake-up occasions may be associated with POs in a sequential order of first frequency domain and then time domain.
   That is, wake-up occasions are mapped (associated/correspond) to POs in the sequential order of first frequency domain and then time domain, in other words, wake-up occasions are mapped (associated/correspond) to UE subgroups corresponding to POs in the sequential order of first frequency domain and then time domain.
   In this way, wake-up occasions may be mapped to first few periodicities as much as possible.
(vi) Wake-up occasions may be associated with POs in a sequential order of first time domain and then frequency domain.

That is, wake-up occasions are mapped (associated/correspond) to POs in the sequential order of first time domain and then frequency domain, in other words, wake-up occasions are mapped (associated/correspond) to UE subgroups corresponding to POs in the sequential order of first time domain and then frequency domain.

In this way, wake-up occasions may be mapped to lower frequency-domain positions as much as possible, and WUS repetition can be supported (the low-power receiver operates in a narrow band, and therefore only WUS repetition in time domain is supported).

In some possible designs, the wake-up occasion may be associated with a subgroup corresponding to a PO.

It may be noted that a PO corresponds to a UE group, the UE group may be divided into multiple UE subgroups, and each UE subgroup may be referred to as a subgroup corresponding to the PO. In this way, only when a WUS is detected by the low-power receiver, the integrated receiver needs to be turned on to receive a PO corresponding to the associated subgroup corresponding to the PO.

In some possible designs, the wake-up occasion may be associated with a paging early indication occasion (PEI-O).

In general, one PEI-O is associated with one or more POs, and therefore one wake-up occasion is associated with one or more POs. In this way, only when a WUS is detected by the low-power receiver, the integrated receiver needs to be turned on to receive the associated PEI-O.

### 2. How to keep time-frequency synchronization of the low-power receiver

It may be noted that when a receiver (e.g., a low-power receiver) wakes up from a long period of sleep, the receiver may be out of time-frequency synchronization, which may reduce the receiving performance of the receiver and make the receiver more complex.

In the case where the receiver is out of time synchronization, a starting time at which the receiver starts to detect a sequence has a deviation (not aligned in time), which may result in a decline in performance of detecting the sequence (although the sequence can resist time deviation to a certain extent). Alternatively, the receiver needs to assume multiple different starting times to detect the sequence, which may make the receiver more complex (with increased power consumption).

In the case where the receiver is out of frequency synchronization, a center frequency point at which the receiver detects a sequence has a deviation (the center frequency point is not aligned), which manifests in time as a deviation in a phase of a received signal, resulting in a decline in performance of detecting the sequence (although the sequence can resist frequency deviation to a certain extent). Alternatively, the receiver needs to assume multiple different center frequency points to detect the sequence, which may make the receiver more complex (with increased power consumption).

In the case where a waveform of a WUS is a single-tone waveform or a single-carrier waveform, the single-tone waveform of the WUS or the single-carrier form of the WUS is generally set to have a relatively wide bandwidth (which may also be understood as that a subcarrier spacing for the WUS is set to be relatively large in the case where the WUS is multiplexed with an OFDM signal), which may result in a relatively short cyclic prefix (CP). In the case of a relatively short CP, the time deviation has a relatively great impact on the performance, while the frequency deviation has a relatively small impact on the performance.

In the case where the waveform of the WUS is a multi-tone waveform or a multi-carrier waveform, a subcarrier spacing for the WUS is generally set to be similar in size with a subcarrier spacing for data/control, which may result in a relatively short CP. In the case of a relatively long CP, the time deviation has a relatively small impact on performance, while the frequency deviation has a relatively great impact on the performance (a proportion of frequency deviation is relatively large in a subcarrier spacing).

In summary, in order to reduce the complexity of the low-power receiver and the length of the sequence of the WUS, the time-frequency synchronization of the low-power receiver needs to be maintained.

In embodiments of the disclosure, for how to maintain the time-frequency synchronization of the low-power receiver, since the low-power receiver is unable to receive an existing reference signal, such as an SSB, a signal that can be received by the low-power receiver and can be used for AGC, time-frequency synchronization, or measurement, i.e., a synchronization preamble, needs to be defined, such that time-frequency synchronization of the low-power receiver can be achieved.

On this basis, in the disclosure, a time-domain resource for a synchronization preamble and/or a frequency-domain resource for the synchronization preamble needs to be defined. Similar to the WUS described above, since characteristics such as reducing the network resource overhead and being suitable for reception by the low-power receiver need to be considered, for the time-domain resource for the synchronization preamble and/or the frequency-domain resource for the synchronization preamble, reference may be made to the time-domain resource for the WUS and the frequency-domain resource for the WUS. However, the synchronization preamble has some unique designs although the synchronization preamble has an association relationship with the WUS.

### 1) How to determine a time-domain resource for a synchronization preamble and/or a frequency-domain resource for the synchronization preamble

Similar to the wake-up signal, in embodiments of the disclosure, how to determine the time-domain resource for the synchronization preamble and/or the frequency-domain resource for the synchronization preamble can be realized via configuration information, that is, the configuration information is used for determining the time-domain resource for the synchronization preamble and/or the frequency-domain resource for the synchronization preamble.

In embodiments of the disclosure, the configuration information may be sent via a higher-layer signaling or a higher-layer parameter in a process such cell search, cell access, cell residence, random access, initial access, cell reselection, cell handover, uplink-downlink resource scheduling, etc.; may be specified (defined/clarified) by a standard protocol(s); or may be pre-configured, which is not limited in the disclosure.

The following takes a terminal and a network device as examples for illustration.

Exemplarily, for the terminal, the terminal may obtain the configuration information, and determine the time-domain resource for the synchronization preamble and/or the frequency-domain resource for the synchronization preamble according to the configuration information.

For a network device, the network device may send the configuration information, and the configuration information is used for determining the time-domain resource for the synchronization preamble and/or the frequency-domain resource for the synchronization preamble.

### 2) The time-domain resource for the synchronization preamble

In embodiments of the disclosure, the time-domain resource for the synchronization preamble may include a size of the time-domain resource for the synchronization preamble.

Additionally, the time-domain resource for the synchronization preamble may include the number of symbols (e.g., the number of OFDM symbols) for the synchronization preamble.

Exemplarily, taking the terminal as an example, the terminal may determine the number of symbols for the synchronization preamble according to the configuration information, and the configuration information is used for determining the number of symbols for the synchronization preamble.

In order to realize that the synchronization preamble can share the same round of beam sweeping with an SSB, the synchronization preamble may be frequency-division-multiplexed with the SSB in embodiments of the disclosure. In this case, the synchronization preamble can share a symbol(s) for an SSB.

For example, the synchronization preamble shares 2 or 4 symbols (e.g., OFDM symbols) for an SSB, that is, the number of symbols for the synchronization preamble is 2 or 4, or the number of symbols for the synchronization preamble 2 or 4 symbols (e.g., OFDM symbols), such that the synchronization preamble can be frequency-division-multiplexed with the SSB.

### 3) The frequency-domain resource for the synchronization preamble

In embodiments of the disclosure, the frequency-domain resource for the synchronization preamble may include a size of the frequency-domain resource for the synchronization preamble.

Additionally, the frequency-domain resource for the synchronization preamble may include a bandwidth for the synchronization preamble.

Exemplarily, taking the terminal as an example, the terminal may determine the bandwidth for the synchronization preamble according to the configuration information, and the configuration information is used for determining the bandwidth for the synchronization preamble.

In some possible designs, since a carrier bandwidth for an eMTC may be 6 RBs or 6 (PRBs, in order to ensure that the low-power receiver can reuse an RF portion for an eMTC receiver, the bandwidth for the synchronization preamble may be 6 RBs or 6 PRBs in embodiments of the disclosure.

In some possible designs, since a bandwidth for a PSS/SSS in the 5G NR may be 12 RBs or 12 PRBs, in order to ensure that the low-power receiver can reuse an RF portion for a PSS/SSS receiver in the 5G NR, the bandwidth for the synchronization preamble may be 12 RBs or PRBs in embodiments of the disclosure.

In some possible designs, the bandwidth for the synchronization preamble may be an integral multiple of 6 RBs or an integral multiple of 6 PRBs. In this way, the synchronization preamble can better coexist with a PDCCH because a bandwidth of a CORESET for the PDCCH is generally an integer multiple of 6 RBs or an integer multiple of 6 PRBs.

### 4) The time-domain resource for the synchronization preamble and the frequency-domain resource for the synchronization preamble

In embodiments of the disclosure, the time-domain resource for the synchronization preamble may include a size of the time-domain resource for the synchronization preamble, and the frequency-domain resource for the synchronization preamble may include a size of the frequency-domain resource for the synchronization preamble.

The time-domain resource for the synchronization preamble may include the number of symbols for the synchronization preamble, and the frequency-domain resource for the synchronization preamble may include the bandwidth for the synchronization preamble.

Exemplarily, taking the terminal as an example, the terminal may determine the number of symbols for the synchronization preamble and the bandwidth for the synchronization preamble according to the configuration information, and the configuration information is used for determining the number of symbols for the synchronization preamble and the bandwidth for the synchronization preamble.

In some possible designs, the low-power receiver needs to detect a sequence of the synchronization preamble. Since a length of the sequence of the synchronization preamble has an impact on detection performance of the low-power receiver, in embodiments of the disclosure, the length of the sequence of the synchronization preamble may be 288 to ensure the detection performance of the low-power receiver.

In the case where the length of the sequence of the synchronization preamble is 288, the synchronization preamble may occupy 288 REs. In this case, the following can be determined in embodiments of the disclosure.
(i) The number of symbols for the synchronization preamble may be 4 (4 symbols or 4 OFDM symbols) and the bandwidth for the synchronization preamble may be 6 RBs or 6 PRBs; or (ii) the number of symbols for the synchronization preamble may be 2 (2 symbols or 2 OFDM symbols) and the bandwidth for the synchronization preamble may be 12 RBs or 12 PRBs. Since the number of symbols for the synchronization preamble is 2, the synchronization preamble may be sent twice in 4 symbols.

In some possible designs, the length of the sequence of the synchronization preamble may be 576 to enhance the detection performance of the low-power receiver. In the case where the length of the sequence of the synchronization preamble is 576, the synchronization preamble may occupy 576 REs. In this case, the following may be determined in embodiments of the disclosure.
(i) The number of symbols for the synchronization preamble may be 4 (4 symbols or 4 OFDM symbols) and the bandwidth for the synchronization preamble may be 12 RBs or 12 PRBs; or (ii) the number of symbols for the synchronization preamble may be 2 (2 symbols or 2 OFDM symbols) and the bandwidth for the synchronization preamble may be 24 RBs or 24 PRBs. Since the number of symbols for the synchronization preamble is 2, the synchronization preamble may be sent twice in 4 symbols.

In some possible designs, the bandwidth for the synchronization preamble may include XRBs or *X* PRBs that serve as a guard band, where *X* is a positive integer, such that adjacent-channel interference can be avoided by using the guard band, thereby reducing complexity of the low-power receiver.

Further, *X* may be 1 for ease of implementation.

### 5) The position of frequency-domain resource for the synchronization preamble

It may be noted that the position of the frequency-domain resource for the synchronization preamble may be understood as one or more positions for the synchronization preamble in the frequency domain or one or more frequency-domain positions for the synchronization preamble.

Exemplarily, taking the terminal as an example, the terminal may determine the position of the frequency-domain resource for the synchronization preamble according to the configuration information.

Since at least one OFDM symbol is required for an analog beam during beam sweeping, if the synchronization preamble only expands in the time domain, the synchronization preamble may occupy more OFDM symbols, resulting in a relatively large network overhead. As can be seen, the position of the frequency-domain resource for the synchronization preamble needs to be determined in embodiments of the disclosure.

In the case where a channel bandwidth is 100 RBs or 100 PRBs (about 20 MHz) and the bandwidth for the synchronization preamble is 6 RBs or 6 PRBs, there may be 16 synchronization preambles in the channel bandwidth. In the case where the channel bandwidth is 240 RBs or 240 PRBs (about 50 MHz) and the bandwidth for the synchronization preamble is 6 RBs or 6 PRBs, there may be 40 synchronization preambles in the channel bandwidth.

For how to determine the position of the frequency-domain resource for the synchronization preamble, the following methods may be adopted in embodiments of the disclosure.
(i) The position of the frequency-domain resource for the synchronization preamble starts from a reference position.

It may be appreciated that, taking the terminal as an example, the terminal may determine that a position of the frequency-domain resource for the synchronization preamble starts from the reference position. Alternatively, the terminal may determine a starting position of the frequency-domain resource for the synchronization preamble according to the reference position in the configuration information.

It may be noted that the reference position may be an RB or a PRB, i.e., an RB or a PRB where the starting position of the frequency-domain resource for the synchronization preamble is located, and the reference position may be configured by a higher-layer parameter.

As can be seen, in embodiments of the disclosure, the starting position of the frequency-domain resource for the synchronization preamble may be determined by the reference position, such that the network device and the terminal may determine, according to an agreed rule, the frequency-domain position for the synchronization preamble with the reference position as a starting point, thereby simplifying signaling and reducing signaling overhead.

In addition, the network device may directly indicate a reference position, such that the terminal can determine the frequency-domain position for the synchronization preamble. However, since the synchronization preamble may be shared by multiple terminals, multiple terminals may share a same reference position, thereby reducing the overhead.

(ii) The position of the frequency-domain resource for the synchronization preamble may be determined by bitmap information, where a bit in the bitmap information may indicate one or more synchronization preambles.

It may be appreciated that, taking the terminal as an example, the terminal may determine the position of the frequency-domain resource for one or more synchronization preambles according to the bitmap information in the configuration information.

As can be seen, the network device may send the bitmap information to indicate the position of the frequency-domain resource for the synchronization preamble, and indication via the bitmap information is conducive to increasing flexibility of configuration, such as skipping a fixed RB(s).

(iii) The position of the frequency-domain resource for the synchronization preamble may be determined by the bitmap information, where a bit in the bitmap information may indicate one or more synchronization preambles plus one or more guard bands.

It may be appreciated that, taking the terminal as an example, the terminal may determine one or more positions of the frequency-domain resource for the synchronization preamble according to the bitmap information in the configuration information.

As can be seen, the network device may send the bitmap information to indicate the position of the frequency-domain resource for the synchronization preamble, and indication via the bitmap information is conducive to increasing the flexibility of configuration, such as skipping a fixed RB(s). Meanwhile, the adjacent-channel interference can be avoided by using the guard band, thereby reducing the complexity of the low-power receiver.

In some possible designs, the bandwidth of the guard band may be *X* RBs or *X* PRBs*,* where *X* is a positive integer, thereby achieving a tradeoff between less adjacent-channel interference and less guard-band resource overhead.

### 6) The position of the time-domain resource for the synchronization preamble

It may be noted that the position of the time-domain resource for the synchronization preamble may be understood as a position of the synchronization preamble or a time-domain position for the synchronization preamble.

Exemplarily, taking the terminal as an example, the terminal may determine the position of the time-domain resource for the synchronization preamble according to the configuration information.

For how to determine the position of the time-domain resource for the synchronization preamble, the following methods may be adopted in embodiments of the disclosure.
(i) The position of the time-domain resource for the synchronization preamble includes a periodicity and an offset.

In some possible designs, the periodicity may be in slot granularity. For example, the periodicity may be 2 slots, 4 slots, etc.

Additionally, the periodicity may indicate that the position of the time-domain resource for the synchronization preamble is a 0th slot, an xth slot, a 2xth slot, and so on, where x is a periodicity value represented/indicated by the periodicity.

In some possible designs, the offset may be in slot granularity. For example, offset may be 1 slot, 2 slots, etc.

Additionally, the periodicity and the offset may be used together to indicate that the position of the time-domain resource for the synchronization preamble is a (0+*y*)th slot, an (*x*+ *y)*th slot, a (2*x*+*y*)th slot, and so on, where *x* is a periodicity value represented/indicated by the periodicity and *y* is an offset value represented/indicated by the offset.

For example, in the case where the periodicity is 4 and the offset is 1, it indicates that the position of the time-domain resource for the synchronization preamble is a slot determined by offsetting 1 slot from the 0th slot, i.e., the 1st slot, or offsetting 1 slot from the 4th slot, i.e., the 5th slot, or the like.

It may be appreciated that, taking the terminal as an example, the terminal may determine a slot-level position of the time-domain resource for the synchronization preamble according to the periodicity and the offset in the configuration information.

As can be seen, the network device may flexibly configure a slot-level position of the time-domain resource for the synchronization preamble by means of the periodicity and the offset, thus contributing to flexibility and diversity of resource configuration.

In some possible designs, the periodicity may be equal to a periodicity for an SSB, and the offset may be equal to an offset for the SSB, such that the synchronization preamble can share a slot resource(s) with the SSB, thereby saving the network resource overhead.

In some possible designs, the periodicity may be in millisecond granularity. For example, the periodicity may be 2 milliseconds, 4 milliseconds, etc.

Additionally, the periodicity may indicate that the position of the time-domain resource for the synchronization preamble is a 0th millisecond, a zth millisecond, a 2zth millisecond, and so on, where z is a periodicity value represented/indicated by the periodicity.

In some possible designs, the offset may be in millisecond granularity. For example, offset may be 1 millisecond, 2 milliseconds, etc.

Additionally, the periodicity and the offset may be used together to indicate that the position of the time-domain resource for the synchronization preamble is a (0+*t)*th millisecond, a (*z*+ *t)*th millisecond, a (2*z*+ *t)*th millisecond, and so on, where *z* is a periodicity value represented/indicated by the periodicity and *t* is an offset value represented/indicated by the offset.

For example, in the case where the periodicity is 4 and the offset is 1, it indicates that the position of the time-domain resource for the synchronization preamble is a millisecond determined by offsetting 1 millisecond from the 0th millisecond, i.e., the 1st millisecond, offsetting 1 millisecond from the 4th millisecond (i.e., the 5th millisecond), or the like.

It may be appreciated that, taking the terminal as an example, the terminal may determine a millisecond-level position of the time-domain resource for the synchronization preamble according to the periodicity and the offset in the configuration information.

As can be seen, the network device may flexibly configure the millisecond-level position of the time-domain resource for the synchronization preamble by means of the periodicity and the offset, thus contributing to the flexibility and diversity of the resource configuration.

In some possible designs, the periodicity may be equal to the periodicity for an SSB, and the offset may be equal to the offset for the SSB, such that the synchronization preamble can share a resource(s) with the SSB, thereby saving the network resource overhead.

(ii) The position of the time-domain resource for the synchronization preamble includes a duration.

In some possible designs, the duration may be in slot granularity.

For example, the duration may be 3 slots, the duration may be 4 slots, etc.

In some possible designs, the duration may be in millisecond granularity.

For example, the duration may be 3 milliseconds, the duration may be 4 milliseconds, etc.

It may be appreciated that, taking the terminal as an example, the terminal may determine the position of the time-domain resource for the synchronization preamble according to the duration in the configuration information.

As can be seen, the network device may flexibly configure the position of the time-domain resource for the synchronization preamble by means of the duration, thus contributing to the flexibility and diversity of the resource configuration.

In some possible designs, the duration may be equal to a duration for an SSB, such that the synchronization preamble can share a slot resource(s) with the SSB, thereby saving the network resource overhead.

(iii) The position of the time-domain resource for the synchronization preamble includes a position of a starting symbol in a slot.

In embodiments of the disclosure, the position of a starting symbol in the slot may be a starting position in symbol (e.g., OFDM symbol) granularity in the slot.

It may be appreciated that, taking the terminal as an example, the terminal may determine the position of the time-domain resource for the synchronization preamble according to the position of the starting symbol in the slot in the configuration information.

As can be seen, the network device may flexibly configure a symbol-level position of the time-domain resource for the synchronization preamble by means of the position of the starting symbol in the slot, thus contributing to the flexibility and diversity of the resource configuration.

In some possible designs, the position of the starting symbol in the slot for the synchronization preamble may be the same as a position of a starting symbol in a slot for an SSB, such that the synchronization preamble can share a slot resource(s) with the SSB, thereby saving the network resource overhead.

(iv) The position of the time-domain resource for the synchronization preamble includes the periodicity for the synchronization preamble, and the periodicity for the synchronization preamble is less than or equal to the paging periodicity.

As can be seen, since the periodicity for the synchronization preamble is less than or equal to the paging periodicity, synchronization performance can be improved.

### 7) The synchronization preamble is associated with the WUS.

It is noted that in the disclosure, the synchronization preamble may be associated with the WUS.

In this case, as can be seen from the above, taking the terminal as an example, the terminal may determine a position of a time-domain resource for the synchronization preamble and/or a position of a frequency-domain resource for the synchronization preamble according to the configuration information.

As can be seen, the time synchronization of the low-power receiver and/or the frequency synchronization of the low-power receiver can be achieved by determining the position of the time-domain resource for the synchronization preamble associated with the WUS and/or the position of the frequency-domain resource for the synchronization preamble associated with the WUS.

In a possible design, a relationship between the position of the time-domain resource for the synchronization preamble and the position of the time-domain resource for the WUS may be as follows.
(i) A starting position of the time-domain resource for the synchronization preamble is before a starting position of the time-domain resource for the WUS.
   That is, a time-domain resource for the synchronization preamble may start from a position before the WUS.
   In this way, since the WUS is preceded by the synchronization preamble associated with the WUS, the time-frequency synchronization of the low-power receiver can be achieved.
(ii) The starting position of the time-domain resource for the synchronization preamble and the starting position of the time-domain resource for the WUS have a time gap therebetween.

That is, the time-domain resource for the synchronization preamble may start at a position one time gap away from the WUS.

It may be noted that the configuration information contains the time gap, and the time gap may be configured or pre-configured by higher layer.

In this way, time-frequency synchronization of the terminal can be achieved by using the synchronization preamble before the WUS. After the time-frequency synchronization is performed by using the synchronization preamble, by means of the time gap introduced, the terminal can perform time-frequency adjustment or correction in the time gap.

In some possible designs, the time gap may be a WUS periodicity.

In this way, the synchronization preamble is sent relatively fixedly in a periodicity before the WUS, and the synchronization preamble and the WUS form a resource pair that has both the function of time-frequency synchronization and the function of wakeup, such that the time-frequency synchronization and wakeup can be achieved simultaneously.

In some possible designs, the time gap may be multiple WUS periodicities.

In this way, the synchronization preamble is sent relatively fixed in *L* (*L*>1) periodicities before the WUS, such that there is a relatively long time for the low-power receiver to correct the time-frequency deviation.

(iii) The time-domain resource for the synchronization preamble occupies a portion of the time-domain resource for the WUS, a time gap exists after the synchronization preamble, and the time gap occupies remaining portion of the time-domain resource for the WUS other than the portion of the time-domain resource for the WUS occupied by the time-domain resource for the synchronization preamble.

That is, the time-domain resource for the synchronization preamble may occupy a portion of the time-domain resource for the WUS, and the time gap may be after the synchronization preamble and occupy another portion of the time-domain resource for the WUS.

In this way, the time resource for wakeup may be divided into three segments: a synchronization preamble, a time gap, and a WUS.

(iv) The time-domain resource for the synchronization preamble may occupy *K* symbols (*K* OFDM symbols), the time gap may be after the synchronization preamble and occupy *P* symbols (*P* OFDM symbols), where *K* is a positive integer greater than 0 and less than 4, and *P* is a positive integer greater than 0 and less than 4.

In this way, a sum of the synchronization preamble associated with the WUS, the time gap, and the WUS may be less than or equal to 4 symbols (4 OFDM symbols), which is equivalent to occupying the time-domain resource for the WUS which is less than or equal to 4 symbols (4 OFDM symbols).

Further, *K* may be equal to 1, and *P* may be equal to 1.

In this way, the synchronization preamble associated with the WUS occupies 1 symbol (1 OFDM symbol), the time gap occupies 1 symbol (1 OFDM symbol), and the WUS occupies 2 symbols (2 OFDM symbols), which are equivalent to occupying the time-domain resource for the WUS which is 4 symbols (4 OFDM symbols), and the time-domain resource for the WUS is sufficient.

In summary, the following will introduce a method for resource determination in embodiments of the disclosure by means of taking that a terminal determines a time-domain resource for a first signal and/or a frequency-domain resource for the first signal as an example.

As illustrated in FIG. 2, FIG. 2 is a schematic flow chart of a method for resource determination in embodiments of the disclosure. The method specifically includes the following.

At S210, a time-domain resource for a first signal and/or a frequency-domain resource for the first signal is determined, where the first signal is a WUS or a synchronization preamble.

It may be noted that, for how to determine the time-domain resource for the first signal and/or the frequency-domain resource for the first signal, references may be made to contents in "1: how to define the time-domain resource for the WUS and/or the frequency-domain resource for the WUS", contents in "2: how to maintain the time-frequency synchronization of the low-power receiver", and other related contents, which is not repeated herein.

As can be seen, by determining the time-domain resource for the first signal and/or the frequency-domain resource for the first signal, the time-domain resource for the first signal and/or the frequency-domain resource for the first signal can be determined, and the time-frequency synchronization of a receiver used to receive the first signal can be maintained, thereby realizing transmission of the first signal.

Specifically, the time-domain resource for the first signal may include the number of symbols for the first signal, and the frequency-domain resource for the first signal includes a bandwidth for the first signal.

As can be seen, in embodiments of the disclosure, the time-domain resource for the first signal may be characterized by the number of symbols for the first signal, and the frequency-domain resource for the first signal may be characterized by the bandwidth for the first signal.

Specifically, the number of symbols for the first signal may be 2 or 4.

In this case, the first signal can be frequency-division-multiplexed with an SSB, that is, the first signal can share 2 or 4 symbols for the SSB.

Specifically, the bandwidth for the first signal may be 6 or 12 RBs, or 6 or 12 PRBs.

In this case, the low-power receiver may reuse an RF portion for an eMTC receiver, and a carrier bandwidth for the eMTC may be 6 RBs or 6 PRBs. Alternatively, the low-power receiver may reuse an RF portion for a PSS/SSS receiver in the NR, and a bandwidth for the PSS/SSS in the 5G NR may be 12 RBs or 12 PRBs.

Specifically, the bandwidth for the first signal may be an integral multiple of 6 RBs or an integral multiple of 6 PRBs.

Specifically, the number of symbols for the first signal may be 4, and the bandwidth for the first signal may be 6 RBs or 6 PRBs.

In this case, the first signal may occupy 288 REs, and accordingly, a length of a sequence of the first signal may be 288, which can ensure the detection performance of the low-power receiver.

Specifically, the number of symbols for the first signal may be 2, and the bandwidth for the first signal may be 12 RBs or 12 PRBs.

In this case, the first signal may occupy 288 REs, and accordingly, the length of the sequence of the first signal may be 288, which can ensure the detection performance of the low-power receiver, and the first signal may be sent twice in 4 symbols.

Specifically, the number of symbols for the first signal may be 4, and the bandwidth for the first signal may be 12 RBs or 12 PRBs.

In this case, the first signal may occupy 576 REs, and accordingly, the length of the sequence of the first signal may be 576, which can enhance the detection performance of the low-power receiver.

Specifically, the number of symbols for the first signal may be 2, and the bandwidth for the first signal may be 24 RBs or 24 PRBs.

In this case, the first signal may occupy 576 REs, and accordingly, the length of the sequence of the first signal may be 576, which can enhance the detection performance of the low-power receiver.

Specifically, the bandwidth for the first signal may include *X* RBs or *X* PRBs that serve as a guard band, where *X* is a positive integer.

In this case, adjacent-channel interference can be avoided and the complexity of the receiver can be reduced.

Specifically, a position of the frequency-domain resource for the first signal may start from a reference position.

In this case, in the case where the reference position (starting position) is determined, the network device and the terminal may determine, according to an agreed rule, all possible positions of the frequency-domain resource for the first signal, thereby simplifying the signaling.

Specifically, the reference position may be configured by a higher-layer parameter.

Specifically, a position of the frequency-domain resource for the first signal may be determined by bitmap information, where a bit in the bitmap information may indicate one or more first signals, or a bit in the bitmap information may indicate one or more first signals plus one or more guard bands.

In this case, in the case where the reference position (starting position) is determined, the network device may indicate to the terminal all possible positions of the frequency-domain resource for the first signal, which is conducive to increasing the flexibility of configuration, such as skipping a fixed RB(s). Alternatively, in the case where the reference position (starting position) is determined, the network device may indicate to the terminal all possible positions of the frequency-domain resource for the first signal, which is conducive to increasing the flexibility of configuration, such as skipping a fixed RB(s). Meanwhile, adjacent-channel interference can be avoided by using the guard band, thereby reducing complexity of the low-power receiver.

Specifically, a bandwidth of the guard band may be *X* RBs or *X* PRBs, where *X* is a positive integer.

In this case, a tradeoff between less adjacent-channel interference and less guard-band resource overhead can be achieved.

Specifically, a position of the time-domain resource for the first signal may include a periodicity and an offset.

In this case, the network device can configure the position of the time-domain resource for the first signal more flexibly.

Specifically, the periodicity for the first signal may be equal to a periodicity for an SSB, and the offset for the first signal may be equal to an offset for the SSB.

In this case, the first signal can share a slot resource(s) with the SSB.

Specifically, the position of the time-domain resource for the first signal may include a duration.

In this case, the network device can configure the duration for the time-domain resource for the first signal more flexibly.

Specifically, the duration for the first signal may be equal to a duration for the SSB.

In this case, the first signal can share a slot resource(s) with an SSB.

Specifically, the position of the time-domain resource for the first signal may include a position of a starting symbol in a slot.

In this case, the network device can configure a symbol-level position of the time-domain resource for the first signal more flexibly.

Specifically, the position of the starting symbol in the slot for the first signal may be the same as a position of a starting symbol in a slot for an SSB.

In this case, the first signal can share a slot resource(s) with an SSB.

Specifically, the position of the time-domain resource for the first signal may include the periodicity for the first signal, and the periodicity for the first signal may be less than or equal to a paging periodicity.

In this case, since the periodicity for the WUS is less than or equal to the paging periodicity, delay caused by wakeup can be reduced. Alternatively, since a periodicity for the synchronization preamble is less than or equal to the paging periodicity, synchronization performance can be improved.

Specifically, the first signal may be the WUS, and the WUS is invalid in the case where the WUS overlaps an SSB.

Specifically, the first signal may be the WUS, the time-domain resource for the first signal and/or the frequency-domain resource for the first signal may be a wake-up occasion, and the wake-up occasion may consist of a set of WUS monitoring occasions.

Specifically, the number of wake-up occasions may be determined by the number of PFs, *N,* and the number of POs, *Ns.*

In this case, after the WUS is detected by the terminal, the terminal is able to determine in which PO a paging message is to be received. That is, after the WUS is detected by the terminal, the terminal is able to determine through which UE subgroup/UE group the paging message is to be received (a paging occasion corresponds to a UE subgroup/UE group). In other words, a mapping relationship between wake-up occasions and (UE subgroups/UE groups corresponding to) POs can be established.

Specifically, the number of wake-up occasions may be *N*Ns.*

Specifically, one wake-up occasion may be associated with one PO.

In this case, an FAR of wakeup can be reduced by means of one-to-one mapping.

Specifically, one wake-up occasion may be associated with multiple POs.

In this case, resource overhead for the WUS can be reduced by means of one-to-many mapping.

Specifically, multiple wake-up occasions may be associated with one PO.

In this case, the low-power receiver is able to monitor multiple wake-up occasions by means of many-to-one mapping, such that WUS repetition can be supported, thereby improving the performance of WUS reception.

Specifically, *K* wake-up occasions may be associated with *M* POs, where *K* and *M* are configured by a higher-layer parameter.

In this case, a balance between resource overhead and receiving performance can be achieved.

Specifically, wake-up occasions may be associated with POs in a sequential order of first frequency domain and then time domain.

In this case, wake-up occasions may be mapped to first few periodicities as much as possible.

Specifically, wake-up occasions may be associated with POs in a sequential order of first time domain and then frequency domain.

In this case, wake-up occasions may be mapped to lower frequency-domain positions as much as possible, and WUS repetition can be supported (the low-power receiver operates in a narrow band, and therefore only WUS repetition in time domain is supported).

Specifically, the wake-up occasion may be associated with a subgroup corresponding to a PO.

It may be noted that a PO corresponds to a UE group, the UE group may be divided into multiple UE subgroups, and each UE subgroup may be referred to as a subgroup corresponding to the PO. In this way, only when a WUS is detected by the low-power receiver, the integrated receiver needs to be turned on to receive a PO corresponding to the associated subgroup corresponding to the PO.

Specifically, the wake-up occasion may be associated with a PEI-O.

It may be noted that one PEI-O is associated with one or more POs, and therefore one wake-up occasion is associated with one or more POs. In this case, only when the WUS is detected by the low-power receiver, the integrated receiver needs to be turned on to receive the associated PEI-O.

Specifically, the first signal may be the synchronization preamble, and the synchronization preamble may be associated with the WUS.

In this case, the terminal can perform time-frequency synchronization in the case where the terminal determines that the wake-up signal has an associated synchronization preamble.

Specifically, a time-domain resource for the synchronization preamble may start from a position before the WUS.

In this case, the terminal can perform time-frequency synchronization in the case where the terminal determines that there is a synchronization preamble before the WUS.

Specifically, the time-domain resource for the synchronization preamble may start at a position one time gap away from the WUS.

In this case, the terminal can perform time-frequency synchronization in the case where the terminal determines that there is a synchronization preamble before the WUS. After the terminal performs time-frequency synchronization by using the synchronization preamble, the terminal can perform time-frequency adjustment or correction in a time gap.

Specifically, the time gap may be one or more WUS periodicities.

In this case, the synchronization preamble is sent relatively fixedly in a periodicity before the WUS, and the synchronization preamble and the WUS form a resource pair that has both the function of time-frequency synchronization and the function of wake-up. Alternatively, the synchronization preamble is sent relatively fixed on several periodicities before the WUS, such that there is a relatively long time for the low-power receiver to correct the time-frequency deviation.

Specifically, the time-domain resource for the synchronization preamble may occupy a portion of a time-domain resource for the WUS, and the time gap may be after the synchronization preamble and occupy another portion of the time-domain resource for the WUS.

In this case, the time resource for wake-up may be divided into three segments: a synchronization preamble, a time gap, and a WUS.

Specifically, the time-domain resource for the synchronization preamble may occupy *K* symbols, the time gap may be after the synchronization preamble and occupy *P* symbols, where *K* is a positive integer greater than 0 and less than 4, and *P* is a positive integer greater than 0 and less than 4.

In this case, a sum of the synchronization preamble, the time gap, and the WUS may be less than or equal to 4 symbols (4 OFDM symbols), which is equivalent to occupying the time-domain resource for the WUS which is less than or equal to 4 symbols (4 OFDM symbols).

Specifically, *K* may be equal to 1, and *P* may be equal to 1.

In this case, the synchronization preamble occupies 1 symbol, the time gap occupies 1 symbol, and the WUS occupies 2 symbols, which are equivalent to occupying the time-domain resource for the WUS which is 4 symbols (4 OFDM symbols), and the time-domain resource for the WUS is sufficient.

The solutions in embodiments of the disclosure are introduced mainly from the perspective of the method. It can be considered that, in order to realize the foregoing functions, the terminal or the network device includes corresponding hardware structures and/or software modules for executing respective functions. Those of ordinary skill in the art will appreciate that units and algorithmic operations of various examples described in connection with embodiments herein may be implemented by hardware or by a combination of hardware and computer software. Whether these functions are performed by means of hardware or hardware driven by computer software depends on the application and the design constraints of the associated technical solution. Those skilled in the art may use different methods with regard to each particular application to implement the described functionality, but such methods may not be regarded as lying beyond the scope of the disclosure.

In embodiments of the disclosure, division of functional units of the terminal or the network device may be implemented according to the foregoing method examples. For example, functional units may be divided to correspond to respective functions, or two or more functions may be integrated into one processing unit. The integrated unit may be implemented in a form of hardware, or may be implemented in a form of software program module. It may be noted that, the division of units in embodiments of the disclosure is illustrative and is only a division of logical functions, and other methods of division may also available in practice.

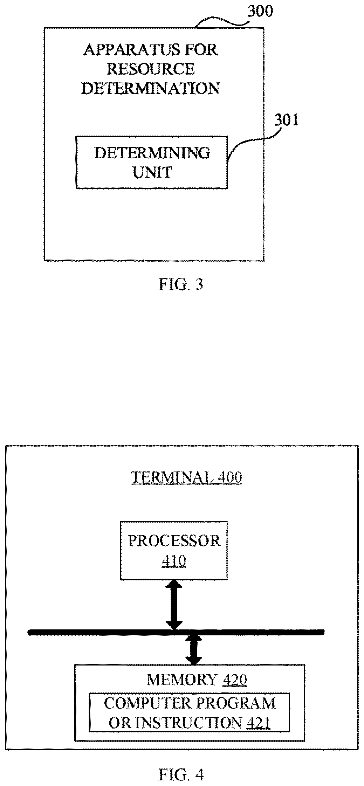

If an integrated unit is adopted, FIG. 3 is a block diagram of functional units of an apparatus for resource determination in embodiments of the disclosure. An apparatus 300 for resource determination includes a determining unit 301.

It may be noted that the determining unit 301 may be a module unit configured to process signals, data, information, and the like, which is not limited in the disclosure.

The apparatus 300 for resource determination may also include an acquisition unit. The acquisition unit is a module unit configured to receive/send signals, data, information, and the like. Additionally, the acquisition unit may be a communication unit, and the communication unit may be a communication interface, a transceiver, a transceiver circuit, and the like.

The apparatus 300 for resource determination may also include a storage unit. The storage unit is configured to store computer program codes or instructions executed by the apparatus 300 for resource determination.

In addition, it may be noted that the apparatus 300 for resource determination may be a chip or a chip module.

The determining unit 301 may be integrated into a unit. For example, the determining unit 301 may be integrated into a processing unit. The processing unit may be a processor or a controller and may be, for example, a central processing unit (CPU), a general-purpose processor, a digital signal processor (DSP), an application-specific integrated circuit (ASIC), a field programmable gate array (FPGA), or other programmable logic devices, transistor logic devices, hardware components, or any combination thereof. Various exemplary logic blocks, modules, and circuits disclosed in the disclosure may be implemented or executed. The processing unit may also be a combination for implementing computing functions, for example, one or more microprocessors, a combination of DSP and microprocessor, or the like.

In an implementation, the determining unit 301 is configured to perform any operation in the foregoing method embodiments, and when performing data transmission such as sending, the determining unit 301 may optionally invoke the acquiring unit to complete corresponding operations. Detailed elaborations will be given below.

The determining unit 301 is configured to determine a time-domain resource for a first signal and/or a frequency-domain resource for the first signal, where the first signal is a WUS or a synchronization preamble.

It may be noted that, for the implementation of various operations in the embodiments illustrated in FIG. 3, reference can be made to the elaborations in the method embodiments above, which is not repeated herein.

Specifically, the time-domain resource for the first signal may include the number of symbols for the first signal, and the frequency-domain resource for the first signal may include a bandwidth for the first signal.

As can be seen, in embodiments of the disclosure, the time-domain resource for the first signal may be characterized by the number of symbols for the first signal, and the frequency-domain resource for the first signal may be characterized by the bandwidth for the first signal.

Specifically, the number of symbols for the first signal may be 2 or 4.

In this case, the first signal can be frequency-division-multiplexed with an SSB, that is, the first signal may share 2 or 4 symbols for the SSB.

Specifically, the bandwidth for the first signal may be 6 or 12 RBs, or 6 or 12 PRBs.

In this case, the low-power receiver may reuse an RF portion for an eMTC receiver, and a carrier bandwidth for the eMTC may be 6 RBs or 6 PRBs. Alternatively, the low-power receiver may reuse an RF portion for a PSS/SSS receiver of the NR, and a bandwidth for the PSS/SSS in the 5G NR may be 12 RBs or 12 PRBs.

Specifically, the bandwidth for the first signal may be an integral multiple of 6 RBs or an integral multiple of 6 PRBs.

Specifically, the number of symbols for the first signal may be 4, and the bandwidth for the first signal may be 6 RBs or 6 PRBs.

In this case, the first signal may occupy 288 REs, and accordingly, a length of a sequence of the first signal may be 288, which can ensure the detection performance of the low-power receiver.

Specifically, the number of symbols for the first signal may be 2, and the bandwidth for the first signal may be 12 RBs or 12 PRBs.

In this case, the first signal may occupy 288 REs, and accordingly, the length of the sequence of the first signal may be 288, which can ensure the detection performance of the low-power receiver, and the first signal may be sent twice in 4 symbols.

Specifically, the number of symbols for the first signal may be 4, and the bandwidth for the first signal may be 12 RBs or 12 PRBs.

In this case, the first signal may occupy 576 REs, and accordingly, the length of the sequence of the first signal may be 576, which can enhance the detection performance of the low-power receiver.

Specifically, the number of symbols for the first signal may be 2, and the bandwidth for the first signal may be 24 RBs or 24 PRBs.

In this case, the first signal may occupy 576 REs, and accordingly, the length of the sequence of the first signal may be 576, which can enhance the detection performance of the low-power receiver.

Specifically, the bandwidth for the first signal may include *X* RBs or *X* PRBs that serve as a guard band, where *X* is a positive integer.

In this case, adjacent-channel interference can be avoided and the complexity of the receiver can be reduced.

Specifically, a position of the frequency-domain resource for the first signal may start from a reference position.

In this case, in the case where the reference position (starting position) is determined, the network device and the terminal may determine, according to an agreed rule, all possible positions of the frequency-domain resource for the first signal, thereby simplifying the signaling.

Specifically, the reference position may be configured by a higher-layer parameter.

Specifically, a position of the frequency-domain resource for the first signal may be determined by bitmap information, where a bit in the bitmap information may indicate one or more first signals, or a bit in the bitmap information may indicate one or more first signals plus one or more guard bands.

In this case, in the case where the reference position (starting position) is determined, the network device may indicate to the terminal all possible positions of the frequency-domain resource for the first signal, which is conducive to increasing the flexibility of configuration, such as skipping a fixed RB(s). Alternatively, in the case where the reference position (starting position) is determined, the network device may indicate to the terminal all possible positions of the frequency-domain resource for the first signal, which is conducive to increasing the flexibility of configuration, such as skipping a fixed RB(s). Meanwhile, adjacent-channel interference can be avoided by using the guard band, thereby reducing complexity of the low-power receiver.

Specifically, a bandwidth of the guard band may be *X* RBs or *X* PRBs, where *X* is a positive integer.

In this case, a tradeoff between less adjacent-channel interference and less guard-band resource overhead can be achieved.

Specifically, a position of the time-domain resource for the first signal may include a periodicity and an offset.

In this case, the network device can configure the position of the time-domain resource for the first signal more flexibly.

Specifically, the periodicity for the first signal may be equal to a periodicity for an SSB, and the offset for the first signal may be equal to an offset for the SSB.

In this case, the first signal can share a slot resource(s) with the SSB.

Specifically, the position of the time-domain resource for the first signal may include a duration.

In this case, the network device can configure the duration of the time-domain resource for the first signal more flexibly.

Specifically, the duration for the first signal may be equal to a duration for the SSB.

In this case, the first signal can share a slot resource(s) with the SSB.

Specifically, the position of the time-domain resource for the first signal may include a position of a starting symbol in a slot.

In this case, the network device can configure a symbol-level position of the time-domain resource for the first signal more flexibly.

Specifically, the position of the starting symbol in the slot for the first signal may be the same as a position of a starting symbol in a slot for the SSB.

In this case, the first signal can share a slot resource(s) with the SSB.

Specifically, the position of the time-domain resource for the first signal may include the periodicity for the first signal, and the periodicity for the first signal may be less than or equal to a paging periodicity.

In this case, since the periodicity for the WUS is less than or equal to the paging periodicity, delay caused by wakeup can be reduced. Alternatively, since a periodicity for the synchronization preamble is less than or equal to the paging periodicity, synchronization performance can be improved.

Specifically, the first signal may be the WUS, and the WUS may be invalid in the case where the WUS overlaps the SSB.

Specifically, the first signal is the WUS, the time-domain resource for the first signal and/or the frequency-domain resource for the first signal is a wake-up occasion, and the wake-up occasion consists of a set of WUS monitoring occasions.

Specifically, the number of wake-up occasions may be determined by the number of PFs, *N,* and the number of POs, *Ns.*

In this case, after the WUS is detected by the terminal, the terminal is able to determine in which PO a paging message is to be received. That is, after the WUS is detected by the terminal, the terminal is able to determine through which UE subgroup/UE group the paging message is to be received (a paging occasion corresponds to a UE subgroup/UE group). In other words, a mapping relationship between wake-up occasions and (UE subgroups/UE groups corresponding to) POs can be established.

Specifically, the number of wake-up occasions may be *N*Ns.*

Specifically, one wake-up occasion may be associated with one PO.

In this case, an FAR of wakeup can be reduced by means of one-to-one mapping.

Specifically, one wake-up occasion may be associated with multiple POs.

In this case, resource overhead for the WUS can be reduced by means of one-to-many mapping.

Specifically, multiple wake-up occasions may be associated with one PO.

In this case, the low-power receiver is able to monitor multiple wake-up occasions by means of many-to-one mapping, such that WUS repetition can be supported, thereby improving the receiving performance of the WUS.

Specifically, *K* wake-up occasions may be associated with *M* POs, where *K* and *M* are configured by a higher-layer parameter.

In this case, a balance between resource overhead and receiving performance can be achieved.

Specifically, wake-up occasions may be associated with POs in a sequential order of first frequency domain and then time domain.

In this case, wake-up occasions may be mapped to first few periodicities as much as possible.

Specifically, wake-up occasions may be associated with POs in a sequential order of first time domain and then frequency domain.

In this case, wake-up occasions may be mapped to lower frequency-domain positions as much as possible, and WUS repetition can be supported (the low-power receiver operates in a narrow band, and therefore only WUS repetition in time domain is supported).

Specifically, a wake-up occasion may be associated with a subgroup corresponding to a PO.

It may be noted that a PO corresponds to a UE group, the UE group may be divided into multiple UE subgroups, and each UE subgroup may be referred to as a subgroup corresponding to the PO. In this way, only when a WUS is detected by the low-power receiver, the integrated receiver needs to be turned on to receive a PO corresponding to the associated subgroup corresponding to the PO.

Specifically, the wake-up occasion may be associated with a PEI-O.

It may be noted that one PEI-O is associated with one or more POs, and therefore one wake-up occasion is associated with one or more POs. In this case, only when the WUS is detected by the low-power receiver, the integrated receiver needs to be turned on to receive the associated PEI-O.

Specifically, the first signal may be the synchronization preamble, and the synchronization preamble may be associated with the WUS.

In this case, the terminal can perform time-frequency synchronization in the case where the terminal determines that the wake-up signal has an associated synchronization preamble.

Specifically, a time-domain resource for the synchronization preamble may start from a position before the WUS.

In this case, the terminal can perform time-frequency synchronization in the case where the terminal determines that there is a synchronization preamble before the WUS.

Specifically, the time-domain resource for the synchronization preamble may start at a position one time gap away from the WUS.

In this case, the terminal device can perform time-frequency synchronization in the case where the terminal determines that there is a synchronization preamble before the WUS. After the terminal performs the time-frequency synchronization by using the synchronization preamble, the terminal can perform time-frequency adjustment or correction in a time gap.

Specifically, the time gap may be one or more WUS periodicities.

In this case, the synchronization preamble is sent relatively fixedly in a periodicity before the WUS, and the synchronization preamble and the WUS form a resource pair that has both the function of time-frequency synchronization and the function of wake-up. Alternatively, the synchronization preamble is sent relatively fixed on several periodicities before the WUS, such that there is a relatively long time for the low-power receiver to correct the time-frequency deviation.

Specifically, the time-domain resource for the synchronization preamble may occupy a portion of a time-domain resource for the WUS, and the time gap may be after the synchronization preamble and occupy another portion of the time-domain resource for the WUS.

In this case, the time resource for wake-up may be divided into three segments: a synchronization preamble, a time gap, and a WUS.

Specifically, the time-domain resource for the synchronization preamble may occupy K symbols, the time gap may be after the synchronization preamble and occupy P symbols, where K is a positive integer greater than 0 and less than 4, and P is a positive integer greater than 0 and less than 4.

In this case, a sum of the synchronization preamble, the time gap, and the WUS may be less than or equal to 4 symbols (4 OFDM symbols), which is equivalent to occupying the time-domain resource for the WUS which is less than or equal to 4 symbols (4 OFDM symbols).

Specifically, *K* may be equal to 1, and *P* may be equal to 1.

In this case, the synchronization preamble occupies 1 symbol, the time gap occupies 1 symbol, and the WUS occupies 2 symbols, which are equivalent to occupying the time-domain resource for the WUS which is 4 symbols (4 OFDM symbols), and the time-domain resource for the WUS is sufficient.

Referring to FIG. 4, FIG. 4 is a schematic structural diagram of a terminal in embodiments of the disclosure. The terminal 400 includes a processor 410, a memory 420, and a communication bus for connecting the processor 410 and the memory 420.

The memory 420 includes, but is not limited to, a random access memory (RAM), a read-only memory (ROM), an erasable programmable ROM (EPROM), or a compact disc ROM (CD-ROM). The memory 420 is configured to store program codes executed by the terminal 400 and data to be transmitted by the terminal 400.

The terminal 400 may also include a communication interface configured to receive and transmit data.

The processor 410 may be one or more CPUs. If the processor 410 is a CPU, the CPU may be a single-core CPU or a multi-core CPU.

The processor 410 in the terminal 400 is configured to execute a computer program or instruction 421 stored in the memory 420 to perform the following operations. The processor 410 is configured to determine a time-domain resource for a first signal and/or a frequency-domain resource for the first signal, where the first signal is a WUS or a synchronization preamble.

It may be noted that, for the implementation of various operations, reference can be made to the corresponding elaborations of the method embodiments above. The terminal 400 may be configured to perform the foregoing method embodiments of the disclosure, which is not described again herein.

Embodiments of the disclosure further provide a chip. The chip includes a processor, a memory, and computer programs or instructions stored in the memory. The processor is configured to execute the computer programs or instructions to perform the operations of the above method embodiments.

Embodiments of the disclosure further provide a chip module. The chip module includes a transceiver assembly and a chip. The chip includes a processor, a memory, and computer programs or instructions stored in the memory. The processor is configured to execute the computer programs or instructions to perform the operations of the above method embodiments.

Embodiments of the disclosure further provide a computer-readable storage medium. The computer-readable storage medium is configured to store computer programs or instructions which, when executed, are operable to perform the operations of the above method embodiments.

Embodiments of the disclosure further provide a computer program product. The computer program product includes computer programs or instructions which, when executed, are operable to perform the operations of the above method embodiments.

It may be noted that, for the sake of brevity, the foregoing embodiments are described as a series of action combinations. However, it will be appreciated by those skilled in the art that the disclosure is not limited to the sequence of actions described. According to embodiments of the disclosure, some steps may be performed in other orders or simultaneously. In addition, it will be appreciated by those skilled in the art that the embodiments described in the specification are preferable embodiments, and the actions, steps, modules, or units involved are not necessarily essential to the disclosure.

In the foregoing embodiments, the elaboration of each embodiment has its own emphasis. For the parts not described in detail in one embodiment, reference may be made to related elaborations in other embodiments.

Those skilled in the art may understand that some or all of the functions of the methods, steps, or related modules/units described in embodiments of the disclosure may be implemented through software, hardware, firmware, or any other combination thereof. When implemented by software, all or some of the functions may be implemented in the form of a computer program product, or may be implemented by a processor executing computer program instructions. The computer program product includes one or more computer program instructions, where the computer program or instruction may consist of corresponding software modules. The software module may be stored in a RAM, a flash memory, a ROM, an EPROM, an electrically EPROM (EEPROM), a register, a hard disk, a mobile hard disk, a CD-ROM, or any other form of storage medium well known in the art. The computer program instruction may be stored in a computer-readable storage medium, or transmitted from one computer-readable storage medium to another computer-readable storage medium. For example, the computer program instruction may be transmitted from one website, computer, server, or data center to another website, computer, server, or data center in a wired method or in a wireless method. The computer-readable storage medium may be any computer-accessible usable medium or a data storage device such as a server, a data center, or the like that integrates one or more usable media. The usable medium can be a magnetic medium (such as a soft disc, a hard disc, or a magnetic tape), an optical medium, or a semiconductor medium (such as a solid state disk (SSD)), etc.

Each module/unit in various devices or products described in the foregoing embodiments may be a software module/unit or a hardware module/unit, or some may be a software module/unit and the rest may be a hardware module/unit. For example, with regard to various devices or products applied to or integrated into a chip, various modules/units included therein may all be realized by means of hardware such as a circuit; or at least some of the modules/units may be realized by means of a software program run on a processor integrated into the chip, and the rest (if any) modules/units may be implemented by means of hardware such as a circuit. The same also applies to various devices or products applied to or integrated into a chip module or various devices or products applied to or integrated into a terminal.

The objectives, technical solutions, and advantages of embodiments of the disclosure are described in detail in the foregoing implementations. It may be appreciated that, the foregoing elaborations are merely some implementations of embodiments of the disclosure, but are not intended to limit the protection scope of embodiments of the disclosure. Any modifications, equivalent replacements, improvements, and the like made based on the technical solutions of embodiments of the disclosure shall all fall within the protection scope of embodiments of the disclosure.

## Claims

1. A method for resource determination, comprising:
determining a time-domain resource for a first signal and/or a frequency-domain resource for the first signal, wherein the first signal is a wake-up signal (WUS) or a synchronization preamble.

2. The method of claim 1, wherein
the time-domain resource for the first signal comprises the number of symbols for the first signal; and
the frequency-domain resource for the first signal comprises a bandwidth for the first signal.

3. The method of claim 2, wherein the number of symbols for the first signal is 2 or 4.

4. The method of claim 2, wherein
the bandwidth for the first signal is 6 or 12 resource blocks (RBs), or 6 or 12 physical resource blocks (PRBs); or
the bandwidth for the first signal is an integral multiple of 6 RBs or an integral multiple of 6 PRBs.

5. The method of claim 2, wherein the number of symbols for the first signal is 4, and the bandwidth for the first signal is 6 RBs or 6 PRBs.

6. The method of claim 2, wherein the number of symbols for the first signal is 2, and the bandwidth for the first signal is 12 RBs or 12 PRBs.

7. The method of claim 2, wherein
the number of symbols for the first signal is 4, and the bandwidth for the first signal is 12 RBs or 12 PRBs; or
the number of symbols for the first signal is 2, and the bandwidth for the first signal is 24 RBs or 24 PRBs.

8. The method of claim 2, wherein the bandwidth for the first signal comprises *X* RBs or *X* PRBs that serve as a guard band, wherein *X* is a positive integer.

9. The method of claim 1, wherein a position of the frequency-domain resource for the first signal starts from a reference position.

10. The method of claim 9, wherein the reference position is configured by a higher-layer parameter.

11. The method of claim 1, wherein
a position of the frequency-domain resource for the first signal is determined by bitmap information, wherein
a bit in the bitmap information indicates one or more first signals; or
a bit in the bitmap information indicates one or more first signals plus one or more guard bands.

12. The method of claim 11, wherein a bandwidth of the guard band is *X* RBs or *X* PRBs, wherein *X* is a positive integer.

13. The method of claim 1, wherein a position of the time-domain resource for the first signal comprises a periodicity and an offset.

14. The method of claim 13, wherein the periodicity for the first signal is equal to a periodicity for a synchronization signal/physical broadcast channel block (SSB), and the offset for the first signal is equal to an offset for the SSB.

15. The method of claim 1, wherein a position of the time-domain resource for the first signal comprises a duration.

16. The method of claim 15, wherein the duration for the first signal is equal to a duration for an SSB.

17. The method of claim 1, wherein a position of the time-domain resource for the first signal comprises a position of a starting symbol in a slot.

18. The method of claim 17, wherein the position of the starting symbol in the slot for the first signal is the same as a position of a starting symbol in a slot for an SSB.

19. The method of any one of claims 1 to 18, wherein a position of the time-domain resource for the first signal comprises a periodicity for the first signal, and the periodicity for the first signal is less than or equal to a paging periodicity.

20. The method of any one of claims 1 to 19, wherein the first signal is the WUS, and the WUS is invalid in the case where the WUS overlaps an SSB.

21. The method of claim 1, wherein the first signal is the WUS, the time-domain resource for the first signal and/or the frequency-domain resource for the first signal is a wake-up occasion, and the wake-up occasion consists of a set of WUS monitoring occasions.

22. The method of claim 21, wherein the number of wake-up occasions is determined by the number of paging frames (PFs), *N*, and the number of paging occasions (POs), *Ns.*

23. The method of claim 21, wherein the number of wake-up occasions is *N***Ns*.

24. The method of claim 21, wherein one wake-up occasion is associated with one PO.

25. The method of claim 21, wherein one wake-up occasion is associated with a plurality of POs.

26. The method of claim 21, wherein a plurality of wake-up occasions are associated with one PO.

27. The method of claim 21, wherein *K* wake-up occasions are associated with *M* POs, wherein *K* and *M* are configured by a higher-layer parameter.

28. The method of any one of claims 21 to 27, wherein wake-up occasions are associated with POs in a sequential order of first frequency domain and then time domain.

29. The method of any one of claims 21 to 27, wherein wake-up occasions are associated with POs in a sequential order of first time domain and then frequency domain.

30. The method of claim 21, wherein the wake-up occasion is associated with a subgroup corresponding to a PO.

31. The method of claim 21, wherein the wake-up occasion is associated with a paging early indication occasion (PEI-O).

32. The method of any one of claims 1 to 19, wherein the first signal is the synchronization preamble, and the synchronization preamble is associated with the WUS.

33. The method of claim 32, wherein a time-domain resource for the synchronization preamble starts from a position before the WUS.

34. The method of claim 32, wherein a time-domain resource for the synchronization preamble starts at a position one time gap away from the WUS.

35. The method of claim 34, wherein the time gap is one or more WUS periodicities.

36. The method of claim 32, wherein a time-domain resource for the synchronization preamble occupies a portion of a time-domain resource for the WUS, and a time gap is after the synchronization preamble and occupies another portion of the time-domain resource for the WUS.

37. The method of claim 32, wherein a time-domain resource for the synchronization preamble occupies *K* symbols, a time gap is after the synchronization preamble and occupies *P* symbols, wherein *K* is a positive integer greater than 0 and less than 4, and *P* is a positive integer greater than 0 and less than 4.

38. The method of claim 37, wherein *K* is equal to 1, and *P* is equal to 1.

39. An apparatus for resource determination, comprising:
a determining unit configured to determine a time-domain resource for a first signal and/or a frequency-domain resource for the first signal, wherein the first signal is a wake-up signal (WUS) or a synchronization preamble.

40. The apparatus of claim 39, wherein
the time-domain resource for the first signal comprises the number of symbols for the first signal; and
the frequency-domain resource for the first signal comprises a bandwidth for the first signal.

41. The apparatus of claim 40, wherein the number of symbols for the first signal is 2 or 4.

42. The apparatus of claim 40, wherein
the bandwidth for the first signal is 6 or 12 resource blocks (RBs), or 6 or 12 physical resource blocks (PRBs); or
the bandwidth for the first signal is an integral multiple of 6 RBs or an integral multiple of 6 PRBs.

43. The apparatus of claim 40, wherein the number of symbols for the first signal is 4, and the bandwidth for the first signal is 6 RBs or 6 PRBs.

44. The apparatus of claim 40, wherein the number of symbols for the first signal is 2, and the bandwidth for the first signal is 12 RBs or 12 PRBs.

45. The apparatus of claim 40, wherein
the number of symbols for the first signal is 4, and the bandwidth for the first signal is 12 RBs or 12 PRBs; or
the number of symbols for the first signal is 2, and the bandwidth for the first signal is 24 RBs or 24 PRBs.

46. The apparatus of claim 40, wherein the bandwidth for the first signal comprises XRBs or *X* PRBs that serve as a guard band, wherein *X* is a positive integer.

47. The apparatus of claim 39, wherein a position of the frequency-domain resource for the first signal starts from a reference position.

48. The apparatus of claim 47, wherein the reference position is configured by a higher-layer parameter.

49. The apparatus of claim 39, wherein
a position of the frequency-domain resource for the first signal is determined by bitmap information, wherein
a bit in the bitmap information indicates one or more first signals; or
a bit in the bitmap information indicates one or more first signals plus one or more guard bands.

50. The apparatus of claim 49, wherein a bandwidth of the guard band is *X* RBs or *X* PRBs*,* wherein *X* is a positive integer.

51. The apparatus of claim 39, wherein a position of the time-domain resource for the first signal comprises a periodicity and an offset.

52. The apparatus of claim 51, wherein the periodicity for the first signal is equal to a periodicity for a synchronization signal/physical broadcast channel block (SSB), and the offset for the first signal is equal to an offset for the SSB.

53. The apparatus of claim 39, wherein a position of the time-domain resource for the first signal comprises a duration.

54. The apparatus of claim 53, wherein the duration for the first signal is equal to a duration for an SSB.

55. The apparatus of claim 39, wherein a position of the time-domain resource for the first signal comprises a position of a starting symbol in a slot.

56. The apparatus of claim 55, wherein the position of the starting symbol in the slot for the first signal is the same as a position of a starting symbol in a slot for an SSB.

57. The apparatus of any one of claims 39 to 56, wherein a position of the time-domain resource for the first signal comprises a periodicity for the first signal, and the periodicity for the first signal is less than or equal to a paging periodicity.

58. The apparatus of any one of claims 39 to 57, wherein the first signal is the WUS, and the WUS is invalid in the case where the WUS overlaps an SSB.

59. The apparatus of claim 39, wherein the first signal is the WUS, the time-domain resource for the first signal and/or the frequency-domain resource for the first signal is a wake-up occasion, and the wake-up occasion consists of a set of WUS monitoring occasions.

60. The apparatus of claim 59, wherein the number of wake-up occasions is determined by the number of paging frames (PFs), *N*, and the number of paging occasions (POs), *Ns.*

61. The apparatus of claim 59, wherein the number of wake-up occasions is *N***Ns*.

62. The apparatus of claim 59, wherein one wake-up occasion is associated with one PO.

63. The apparatus of claim 59, wherein one wake-up occasion is associated with a plurality of POs.

64. The apparatus of claim 59, wherein a plurality of wake-up occasions are associated with one PO.

65. The apparatus of claim 59, wherein *K* wake-up occasions are associated with *M* POs, wherein *K* and *M* are configured by a higher-layer parameter.

66. The apparatus of any one of claims 59 to 65, wherein wake-up occasions are associated with POs in a sequential order of first frequency domain and then time domain.

67. The apparatus of any one of claims 59 to 65, wherein wake-up occasions are associated with POs in a sequential order of first time domain and then frequency domain.

68. The apparatus of claim 59, wherein the wake-up occasion is associated with a subgroup corresponding to a PO.

69. The apparatus of claim 59, wherein the wake-up occasion is associated with a paging early indication occasion (PEI-O).

70. The apparatus of any one of claims 39 to 57, wherein the first signal is the synchronization preamble, and the synchronization preamble is associated with the WUS.

71. The apparatus of claim 70, wherein a time-domain resource for the synchronization preamble starts from a position before the WUS.

72. The apparatus of claim 70, wherein a time-domain resource for the synchronization preamble starts at a position one time gap away from the WUS.

73. The apparatus of claim 72, wherein the time gap is one or more WUS periodicities.

74. The apparatus of claim 70, wherein a time-domain resource for the synchronization preamble occupies one portion of a time-domain resource for the WUS, and a time gap is after the synchronization preamble and occupies another portion of the time-domain resource for the WUS.

75. The apparatus of claim 70, wherein a time-domain resource for the synchronization preamble occupies *K* symbols, a time gap is after the synchronization preamble and occupies *P* symbols, wherein *K* is a positive integer greater than 0 and less than 4, and *P* is a positive integer greater than 0 and less than 4.

76. The apparatus of claim 75, wherein *K* is equal to 1, and P is equal to 1.

77. A terminal device, comprising a processor, a memory, and computer programs or instructions stored in the memory, wherein the processor is configured to execute the computer programs or instructions to perform the operations of the method of any one of claims 1 to 38.

78. A computer-readable storage medium configured to store computer programs or instructions which, when executed, are operable to perform the operations of the method of any one of claims 1 to 38.

79. A chip, comprising a processor configured to perform the operations of the method of any one of claims 1 to 38.
